**Europäisches Patentamt**

**European Patent Office**

**Office européen des brevets**

(11) Numéro de publication: **0 049 650**
**A1**

(12) **DEMANDE DE BREVET EUROPEEN**

(21) Numéro de dépôt: **81401430.4**

(22) Date de dépôt: **14.09.81**

(51) Int. Cl.³: **G 07 F 7/10**
**G 06 K 19/06**

(30) Priorité: **16.09.80 FR 8019951**

(43) Date de publication de la demande:
**14.04.82 Bulletin 82/15**

(84) Etats contractants désignés:
**CH FR IT LI SE**

(71) Demandeur: **COMPAGNIE INTERNATIONALE POUR L'INFORMATIQUE CII - HONEYWELL BULL (dite CII-HB)**
**94, avenue Gambetta**
**F-75020 Paris(FR)**

(72) Inventeur: **De Pommery, Bertrand, J-M. C. H.**
**94, avenue Gambetta**
**F-75020 Paris(FR)**

(72) Inventeur: **Ugon, Michel**
**94, avenue Gambetta**
**F-75020 Paris(FR)**

(74) Mandataire: **Doireau, Marc**
**94 avenue Gambetta**
**F-75960 Paris cedex 20(FR)**

(54) **Appareil de distribution d'objets et d'acquisition de services.**

(57) L'appareil est constitué d'au moins un support amovible (102), un second moyen de traitement de l'information (115), un troisième moyen de dialogue bidirectionnel (103) entre le support amovible (102) et le second moyen de traitement de l'information (115), un quatrième moyen de délivrance du service (116). Le support amovible comprend des moyens de connection, des moyens de traitement de l'information, des moyens de mémorisation et des moyens de décision, des moyens de dialogue bidirectionnels.

Application : Appareils de distribution de billets de banques ou de services.

FIG. 1

EP 0 049 650 A1

- 1 -

# APPAREIL DE DISTRIBUTIION D'OBJET ET D'ACQUISITION DE SERVICES

La présente invention concerne un appareil de distribution d'objet et d'acquisition de service dont l'accès est déclenché par introduction d'un support amovible dans le distributeur, ledit support étant composé d'une mémoire pour mémoriser des données confidentielles pour permettre l'accès audit distributeur ainsi que d'un organe de traitement de l'information ou microprocesseur pour commander la mémoire et opérer des traitements sur les données échangées entre le support d'information et ledit distributeur.

On connaît des distributeurs de service du type de ceux utilisés pour la distribution des billets de banque, de la monnaie métallique ou de jetons de téléphone. Ces distributeurs sont généralement actionnés, soit à partir d'une carte à piste magnétique dans laquelle est enregistré un code confidentiel, soit à partir d'un badge codé ou de pièces métalliques.

Tous ces systèmes de distribution utilisent pour leur sécurité des systèmes de reconnaissance très différents, dont les plus connus consistent soit à effectuer une pesée de la pièce introduite dans le distributeur, soit à effectuer une mesure magnétique, soit à identifier optiquement des figurines, soit dans le cas des badges contenant des informations, à enregistrer des informations sur des pistes magnétiques ou sur un support holographique pour comparer l'information lue sur le badge par le distributeur à l'information fournie par l'utilisateur demandant une prestation de service au distributeur.

Tous ces moyens ont les inconvénients connus d'attirer l'attention des fraudeurs qui cherchent par tout moyen à percer le secret des informations contenues dans les badges, pour se procurer à peu de frais les avantages offerts par les distributeurs, au détriment de la personne ou de la société prestataire de services ou du titulaire légitime du badge.

Le but de la présente invention est d'offrir un appareil distributeur qui présente une sécurité quasi absolue au prestataire de service et au propriétaire de badge.

Le système permet, grâce à l'usage de deux supports amovibles, d'atteindre plusieurs niveaux de sécurité. Un premier niveau de sécurité est atteint par corrélation des informations traitées par le premier support amovible avec les informations introduites dans le système par la personne demandant l'accès au distributeur. Un deuxième niveau de sécurité est apporté par l'usage d'un deuxième support amovible pour habiliter le premier support amovible. Un troisième niveau de sécurité est apporté grâce au type de liaison et au dialogue mis en oeuvre entre les supports amovibles et les moyens de traitement du distributeur et enfin un quatrième niveau de sécurité est atteint en munissant des moyens de traitement du distributeur de moyens lui permettant de consulter un fichier contenant la liste des supports amovibles invalidés pour empêcher l'accès des supports amovibles au distributeur qui ont été subtilisés à leurs titulaires légitimes.

Pour atteindre ces objectifs, le système de distribution de service ou d'objets selon l'invention est composé de la combinaison des moyens suivants :
- des premiers moyens de connexion permettant de recevoir au moins un premier et un second support amovible (2) pour assurer la connexion au système de distribution

- un second moyen d'identification et de mémorisation situé à l'intérieur de chacun des supports amovibles
- un troisième (15) moyen de traitement de l'information pour assurer le fonctionnement général du système
- un quatrième moyen (111, 112) pour assurer les liaisons physiques manuels ou automatiques entre l'usager et le système
- un cinquième moyen d'enregistrement pour assurer l'interface physique entre le système, l'usager et le prestataire de service
- un sixième moyen de mémorisation pour assurer la sécurité du système
- un septième moyen de mémorisation pour assurer la mémorisation des opérations effectuées par le distributeur
- un huitième moyen de distribution à l'usager de la prestation de service ou de l'objet demandé
- un neuvième moyen pour assurer un dialogue bidirectionnel entre les dits second moyen et troisième moyen.

L'invention sera mieux comprise à l'aide de la description faite au regard des dessins qui va suivre.

La figure 1 représente le distributeur d'objets ou de services selon l'invention.

La figure 2 est une représentation simplifiée d'un support amovible.

La figure 3 est une représentation du moyen de traitement de l'information 15 de la figure 1.

La figure 4 représente les dispositifs électroniques des supports amovibles du distributeur.

Les figures 5 et 6 représentent une organisation du contenu informatique d'un support amovible.

La figure 7 représente les circuits nécessaires à la transmission bidirectionnelle des messages selon l'invention.

La figure 8 est une représentaion des circuits de commande de la figure 3.

La figure 9 représente les registres de travail du microprocesseur 8085 commercialisé par la société INTEL et utilisé pour constituer l'unité de traitement de la figure 3.

La figure 10 est un diagramme des temps représentant une transmission d'un message d'un octet.

La figure 11 est un organigramme montrant les étapes du déroulement du programme d'émission des informations sur la ligne de transmission.

La figure 12 est un organigramme montrant les étapes de déroulement du programme de test des informations sur la ligne de transmission entre deux émissions.

Les figures 13 et 14 sont des organigrammes montrant les étapes de déroulement des programmes de lecture des informations transmises entre l'organe de traitement 15 et un support amovible quelconque.

Les figures 15 et 16 illustrent le fonctionnement d'un support amovible en mode de lecture de sa mémoire.

Les figures 17 et 18 illustrent le fonctionnement d'un support amovible en mode d'écriture de sa mémoire.

La figure 19 est une représentation du circuit de comparaison de la figure 3.

La figure 20 est une représentation du générateur de code aléatoire de la figure 3.

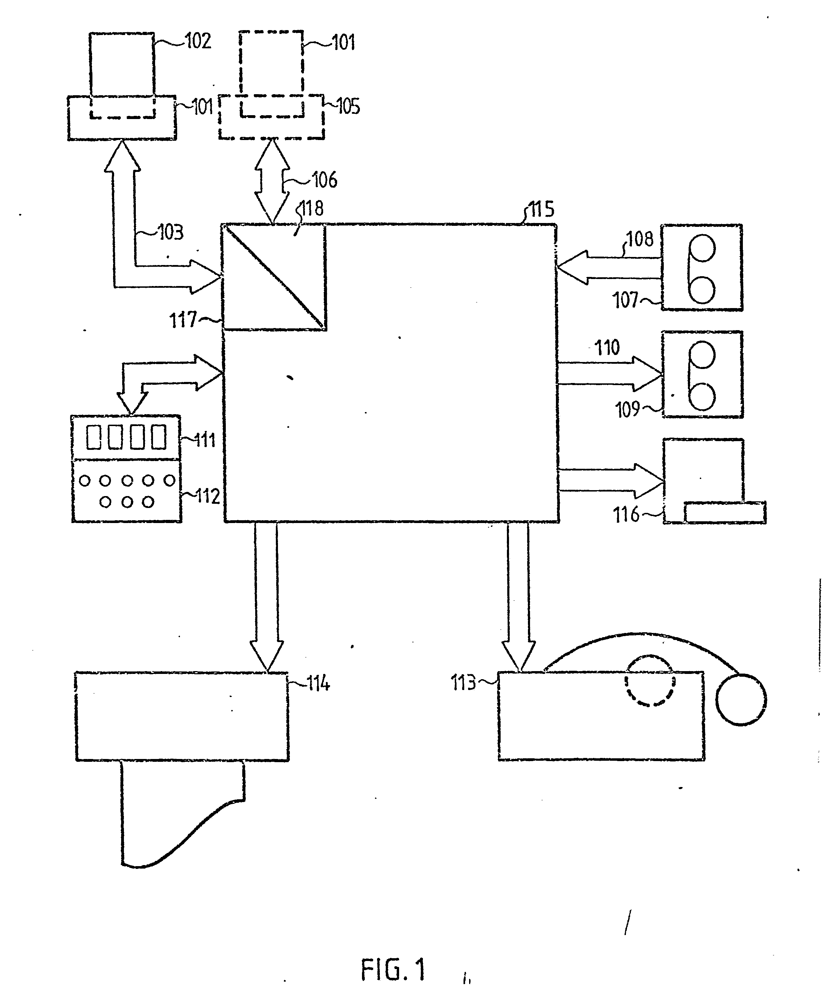

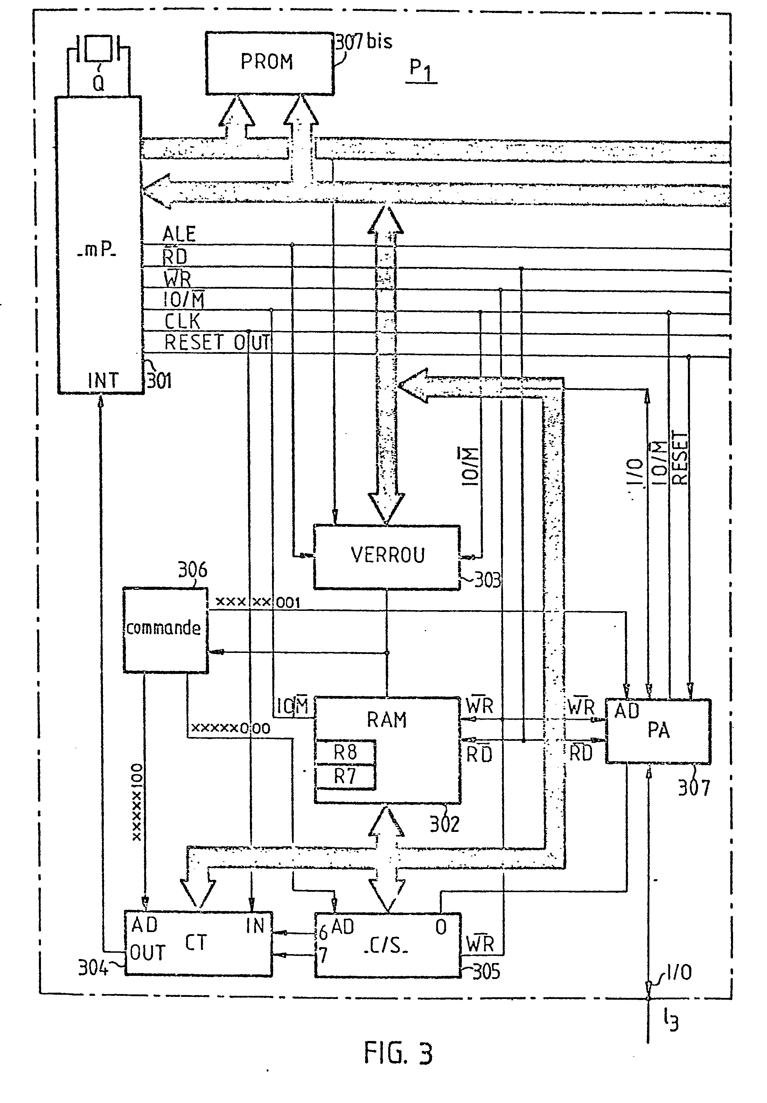

Le distributeur de la figure 1 se compose d'un moyen de traitement de l'information 115 connecté à plusieurs organes périphériques. Ces organes périphériques se composent :
- d'une moyen 101 de connection d'un premier support amovible 102, de moyens de dialogue 113 entre le premier support amovible et le moyen de traitement de l'information 115, un second support amovible 104, des seconds moyens 105 de connexion du second support amovible 104 à des moyens 106 de dialogue associés au moyen de traitement de l'information 115, des moyens 107 de mémorisation d'informations pour assurer la sécurité du système, eux-mêmes reliés au moyen de traitement de l'information 115 par la liaison 108, un moyen 109 de mémorisation des opérations de distribution relié au moyen de traitement de l'information 115 par la liaison 110, un moyen 111 d'affichage des messages transmis par un moyen 112 d'entrée d'informations extérieure au système, un moyen 113 d'enregistrement local mis à la disposition du prestataire de services, un moyen 114 d'enregistrement local mis à la disposition de l'usager, un moyen 116 de distribution de services ou d'objets, des programmes 117 et 118 propres au problème posé par la distribution d'objets ou de services et enregistrés à l'intérieur du moyen de traitement de l'information 115 et spécifiques respectivement de la nature des supports amovibles 102 et 104. Le moyen de traitement de l'information 115 représenté à la figure 3 comprend au moins un microprocesseur 301, associé à un dispositif de commande des entrées-sorties des informations entrantes ou sortantes du distributeur et constitué par un dispositif de mémorisation 302, un dispositif de verrouillage 303, un compteur de temps 304, une mémoire PROM 307bis, un circuit 307 de transmission et réception des données connecté à deux conducteurs de données IO1 et IO2, un comparateur

d'identification 309, un générateur de code aléatoire 310 et un circuit d'interface PIO 308.

La structure du microprocesseur 301 pourra correspondre à celle du microprocesseur ---- type 8085 commercialisé par la société INTEL. Le microprocesseur est relié aux éléments périphériques de la figure 1 107, 109, 111, 112, 113 et 114 extérieurs par les lignes d'adresse $A_8$-15 et de données $AD_0$-7 par l'intermédiaire de l'adaptateur d'interface PIO 308. Les 8 lignes de données $AD_0$-7 sont reliées à l'entrée d'un registre à verrouillage 303 pour adresser la mémoire à accès aléatoire RAM2. Cette mémoire RAM2 peut avoir une capacité de 2 K bits organisée en 256 x 8 bits. Elle contient une zone de travail nécessaire au traitement des informations ainsi que les programmes 117 et 118 nécessaires au déroulement des opérations propres au distributeur. Dans la zone de travail 2 registres R6, R7 et R8 sont prévus. Le registre R7 mémorise l'octet transféré au travers de la porte PA et le registre R8 mémorise le bit de parité correspondant à l'octet transféré. Le registre 303 sélectionne aussi, par l'état de ses sorties, l'organe de commande 306. Le registre R6 est réservé à la mémorisation d'un code d'identification In dont le rôle sera plus loin explicité.

L'organe de commande 306 sélectionne dans le circuit 307 de transmission/réception des données la ligne IO1 lorsque la configuration binaire mémorisée dans le registre 303 est XXXXX001, de même, il sélectionne dans ce même circuit la ligne IO2 pour la configuration XXXXX111 du reegistre 303. Il sélectionne le registre d'état 305 lorsque la configuration binaire dans le registre 303 est XXXXX000, il sélectione le compteur de temps 307 lorsque la configuration binaire dans le registre 303 est XXXXX100, il sélectionne le générateur de code aléatoire ME 310 pour la configuration binaire XXXXX110 du registre 303 et le comparateur 309 lorsque la configuration binaire du registre 303 est XXXXX101. Le compteur de temps 304 a ses entrées parallèlement reliées aux lignes de données AD0-7 de façon à pouvoir être chargé à tout moment par le microprocesseur à une valeur de temps initiale. Le registre d'état C/S 5 est lui aussi relié aux lignes AD0-7 pour lui permettre de mémoriser un ordre envoyé par le microprocesseur. C'est un registre à 8 bascules dont les états permettent la sélection soit du circuit d'entrée/sortie PA 307 (ligne C/S1) ou du compteur de temps CT304 (lignes CS2 et CS3). La ligne ALE connecte le microprocesseur 301 au registre 303 et transporte le signal de verrouillage du registre 303 pour autoriser ou non l'adressage de la mémoire RAM302 et de l'organe de commande 306.

La ligne IO/M sélectionne soit la mémoire RAM2, soit le circuit 307 d'entrée/sortie. Les lignes RD et WR commandent les opérations de lecture/écriture et sont reliées aux circuits de commandes appropriées de la mémoire RAM2 et du circuit 307.

Le microprocesseur 301 est synchronisé par une horloge Q qui peut être un quartz, il transmet des signaux d'horloge sur la ligne CLK à l'entrée IN du compteur de temps CT304 et à l'entrée CK du générateur de code aléatoire GE 310. La ligne RESET out est reliée à l'entrée du circuit 7 et permet d'initialiser le système en mode d'entrée/sortie.

La sortie du compteur de temps CT 304 est reliée à l'entrée R5T5 du microprocesseur 1 pour délivrer un signal d'interruption du traitement qui est en cours lorsque la valeur du compte initialement chargé à l'intérieur du compteur de temps CT4 est épuisée. Le microprocesseur 1 est également relié par ses lignes de données et d'adresse à une mémoire morte 7bis dans laquelle figurent inscrits les microprogrammes nécessaires à la transmission et à la réception des données par le distributeur.

Le générateur de code aléatoire GE 310 est commandé par l'organe de commande 306 lorsque la configuration binaire dans le registre 303 est XXXXX110 pour délivrer un signal de code aléatoire en direction du circuit d'entrée sortie PA307.

Le comparateur 309 est commandé par l'organe de commande 306 lorsque la configuration binaire dans le registre 303 est XXXXX101, son rôle est de vérifier les droits d'accès du support amovible de l'utilisateur.

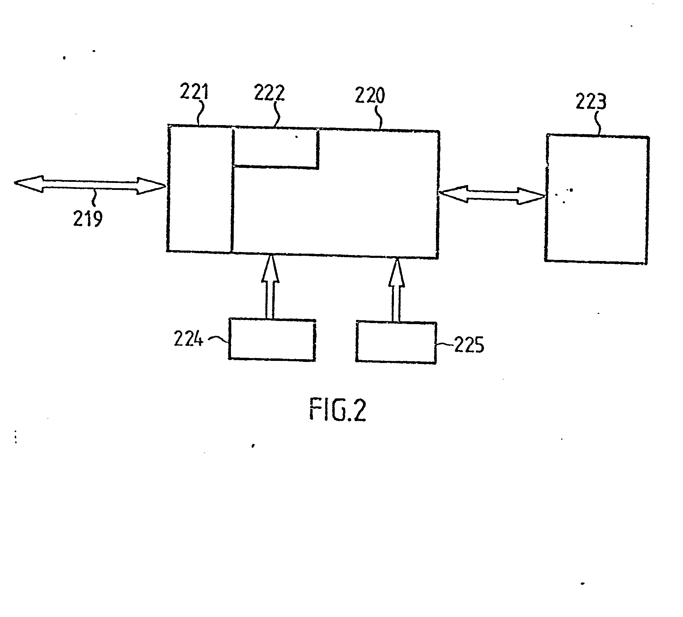

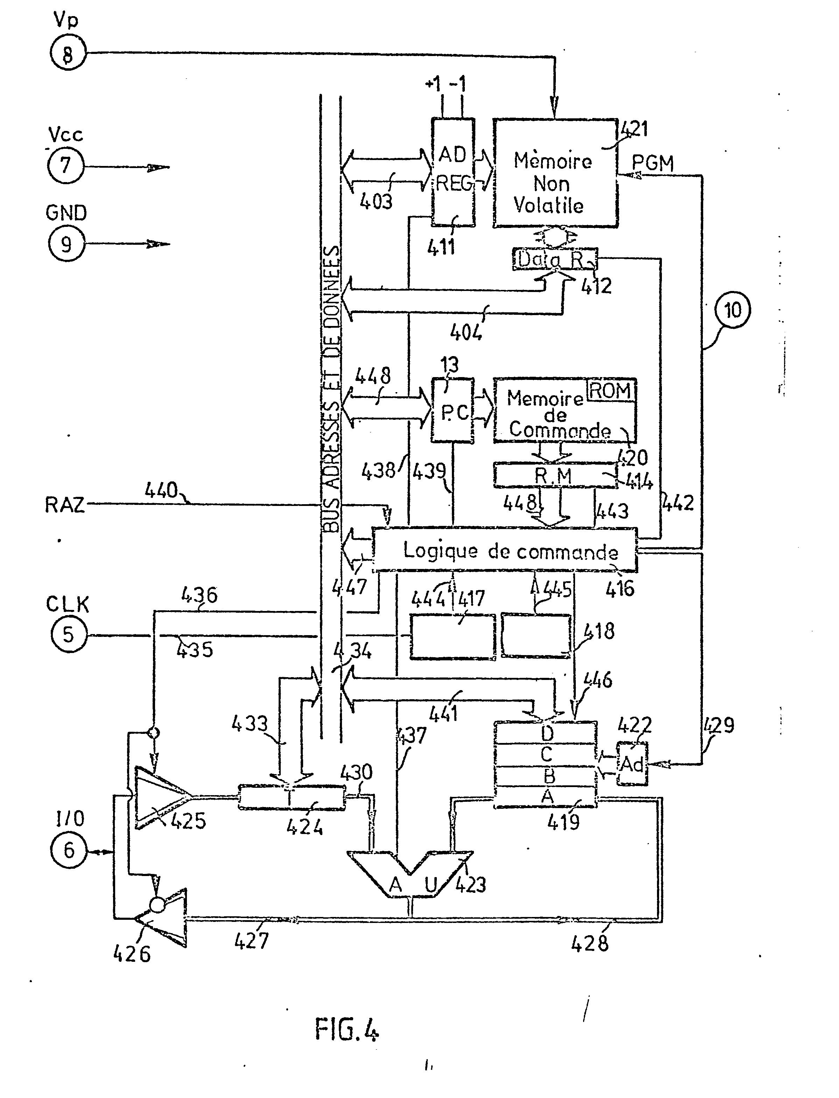

Une représentation simplifiée des supports amovibles est donnée à la figure 2. Chaque support amovible comprend un moyen 220 de traitement de l'information adapté au type de distribution, un moyen 221 d'adaptation logique pour permettre un dialogue bidirectionnel et spécifique au type de distribution, un moyen 222 de décision, un moyen 223 de mémorisation, un moyen 224 de mémorisation d'informations propres à l'usager et un moyen 225 d'informations propres au support amovible. Le moyen 219 assure la liaison physique entre le support amovible et les moyens de connexion 101 et 105 de la1 figure 1. L'ensemble des moyens de la figure 2 se retrouve détaillé sur la figure 4.

Sur cette figure, les informations entrantes ou sortantes par la liaison 219 apparaissent sous forme binaire sur la borne 6 du support d'information.

Elles entrent dans le support d'information par la porte 425 et sont mémorisées dans le registre à décalage T424, la porte 425 étant commandée par le signal transitant sur la ligne 436 reliant la porte 425 à une logique de commande 416. Les informations sortent du support d'information par la porte 426, elle-même commandée par le signal présent sur la liaison 436 reliant la porte 426 à la logique de commande 416. L'information contenue dans le registre T424 sert ensuite de premier opérande pour une opération arithmétique/logique effectuée dans l'unité arithmétique logique 423 commandée par le signal de commande émis par logique de commande 416 sur la liaison 437. Le deuxième opérande est trouvé dans un des registres A, B, C, D du banc de registres 419 adressé par le sélecteur d'adresse 422, lequel est commandé par la logique de commande 416 à l'aide de la liaison 429. Le résultat d'une opération effectuée par l'unité arithmétique/logique est transmis soit dans le registre A du banc de registre 419, soit vers la borne 6 du support d'information au travers de la porte 426. Les registres A, B, C, D peuvent aussi être chargés à partir du bus de données et d'adresse 434 par la liaison 441 sous la commande de la logique de commande 416 par la liaison 446. Le bus 434 est aussi relié par la liaison bidirectionnelle 433 au registre à décalage T424 qui est alors chargé ou lu sur ses entrées/sorties parallèles. La logique de commande 416 retransmet les microinstructions adressées par le sélecteur d'adresse PC413 dans la mémoire de commande 420 du type ROM et lues dans le registre RM414 par la liaison 448.

La mémoire 421 est une mémoire non volatile, elle est adressée par le registre d'adresse 411 chargée par le bus 434 et la liaison 403. Le registre d'adresse 411 pointe les mots d'information dans la mémoire 421.

Le registre 411 est commandé par le signal de commande émis sur la liaison 438 reliant la logique de commande 416 au registre d'adresse 411. L'adresse contenue dans le registre 411 peut être incrémentée ou décrémentée automatiquement par l'horloge émise sur la borne 5 du support d'information sous le contrôle de la logique de commande 416. Les données lues en mémoire 421 sont transmises sur le bus 434 par l'intermédiaire du registre de donnée 412 sous le contrôle de la logique de commande 416 et la liaison 442. Tous les éléments pris isolément de la figure 4 sont bien connus de l'homme de l'art. Pour plus de détails concernant ces supports d'information, on pourra se reporter utilement au brevet des Etats-Unis d'amérique No 4 211 419 appartenant à la demanderesse.

Le support amovible comprend en outre un registre d'état C/S 449 et un compteur de temps CT 450 identiques à ceux représentés à la figure 3.

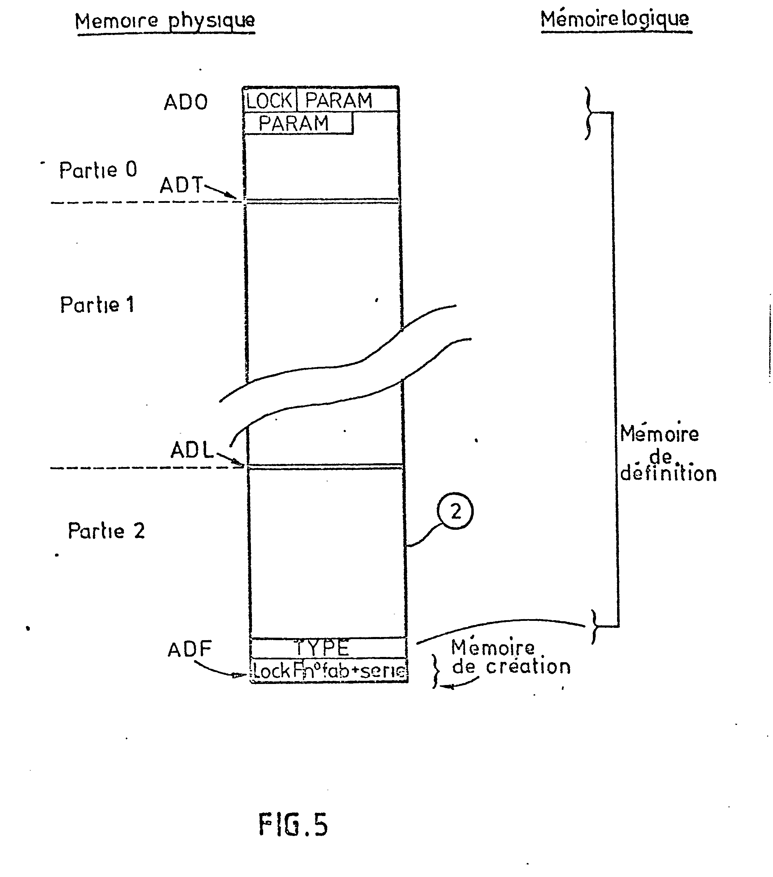

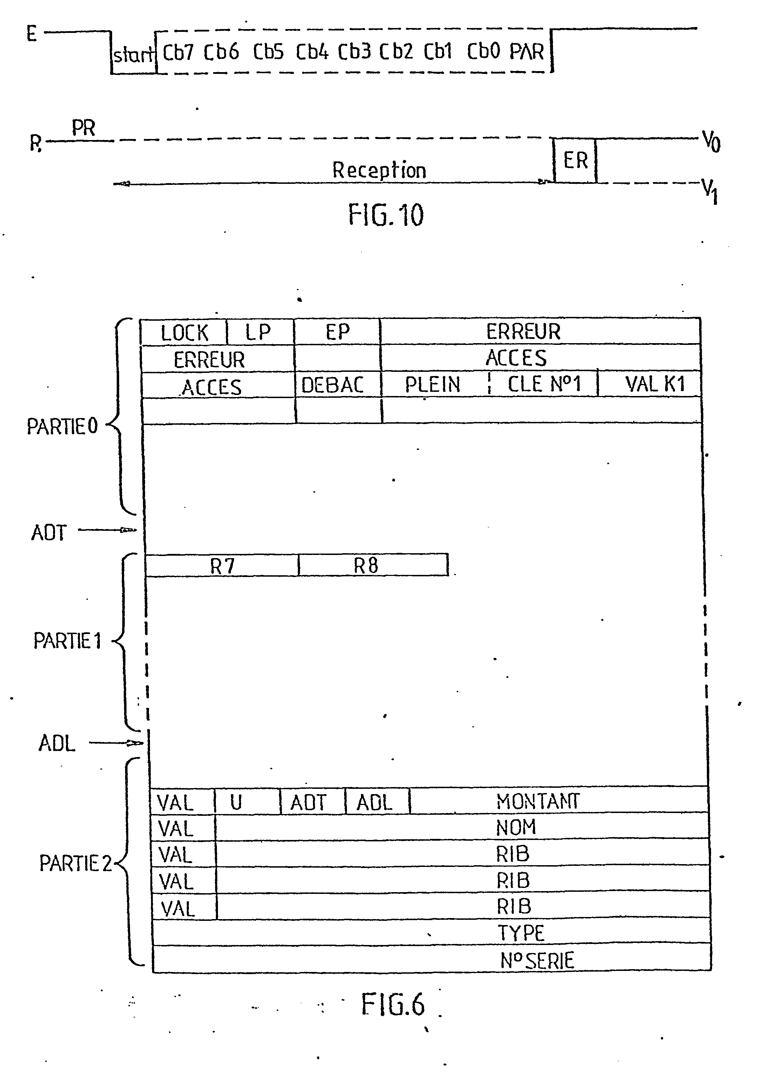

Le contenu informatique du support d'information est représenté aux figures 5 et 6. De façon à rendre le support d'informations apte à tous usages, il est prévu deux types d'organisation de la mémoire du microprocesseur.

La première organisation correspond à l'organisation physique de la mémoire, et est seule connue du microprocesseur.

La deuxième organisation correspond à l'organisation logique de la mémoire et répond aux besoins de l'exploiration du support d'information.

Le microprocesseur se charge d'effectuer les correspondances entre ces deux types d'organisation.

La mémoire physique comprend en travail normal trois parties.

La partie 0 commence à l'adresse AD0 et se termine à l'adrelsse ADT-1. Elle correspond à la partie secrète de la mémoire pour laquelle toutes écritures et toutes lectures externes sont interdites, et où seule une lecture/écriture interne est autorisée.

La partie 1 commence à l'adresse ADT et se termine à l'adresse ADL-1. Elle sert de mémoire de travail pour le microprocesseur et toutes les opérations d'écriture et de lecture internes ou externes sont autorisées. Elle comprend en particulier les registres R7 et R8 utilisés au transfert des informations entre le support amovible et le moyen de traitement de l'information.

La partie 2 commence à l'adresse ADL et se termine à l'adresse ADF. Dans cette partie de mémoire toute écriture interne et externe se trouve interdite, par contre une lecture externe ou interne est autorisée.

La mémoire logique se subdivise en une mémoire de création et. une mémoire d'utilisation.

Pour être opérationnel le support d'information doit contenir au moment de sa diffusion des informations permettant de l'identifier. Ces informations sont contenues dans la mémoire de création qui est organisée en plusieurs zones commençant à l'adresse ADF et qui permettent d'identifier le fabricant du support d'information, le numéro de série, une zone LOCKF de validation du contenu de la mémoire de création et pour autoriser des écritures à l'intérieur. La zone LOCKF pourra par exemple être dimensionnée sur 2 bits et l'on pourra utiliser le code suivant. Si LOCKF = 11, toutes lectures et écritures seront possibles à l'intérieur de la zone de création, par contre si LOCK # 11, le contenu de la zone de création sera validé et toute opération d'écriture sera interdite.

La mémoire d'utilisation est spécifique de l'usage que l'utilisateur du support d'information compte faire. Cependant quel que soit l'usage envisagé, cette mémoire se divise elle même en deux parties, l'une étant appelée mémoire de définition et l'autre mémoire d'application. La dimension de ces zones dépendra naturellement de l'usage envisagé. La mémoire de définition commence à l'adresse ADO. Elle comprend
:

- une zone LOCK à plusieurs bits interdisant les accès
externes à la mémoire de définition et validant son contenu,
- une zone PARAM dont la longueur dépend du type de support
d'information et qui contient les paramètres nécessaires au
fonctionnement du support d'information,
- une zone TYPE pour définir la fonction du support
d'information qui peut être utilisée comme support comptable,
ticket de restaurant, timbre électronique, clè d'accès dans
des hotels, fichiers, distributeur de billets de banques,
etc...

La mémoire d'application est constituée des zones restantes.
Elle est utilisable en mémoire banalisée mais les conditions
d'accès aux parties de la mémoire physique doivent être
respectées. En conséquence quelques soient les applications
que peut recevoir le support d'information de l'invention,
les informations secrètes seront toujours localisées en
partie 0, les informations devant être seulement lues seront
localisées en partie 2, les informations à mémoriser au cours
de l'exploitation normale du support d'information seront en
partie 1. Le format utilisé pour les informations logiques à
mémoriser dans la mémoire d'application pourra naturellement
être quelconque.

On va maintenant donner un exemple de découpage de la mémoire
logique dans le cadre d'une application financière en faisant
référence à la figure 6.

Dans ce cadre l'accès au support d'information nécessitera la
présence d'au moins deux clés. S'il s'agit d'opérations
bancaires une clé n° 1 identifiera le banquier (code
d'identification $I_1$) et une clé n° 2 identifiera le client
(code d'identification $I_2$). La mémoire de définition comprendra alors une zone type avec un code pour désigner l'application financière du support d'information. Une zone PARAM comprenant : la zone LOCK à 2 bits, si LOCK = 11 l'accès en écriture dans toutes les parties de mémoire n'est autorisé que si la clé 1 est présente. Si LOCK est différent de 11 le contenu des parties 0 et 2 de la mémoire physique est validé, l'accès en partie 0 et l'écriture en partie 2 de la mémoire physique sans la clé n° 2 sont interdits. Pour créditer la carte, la clé n°1 est nécessaire si LOCK est différent de 11, le contenu de la mémoire de définition est validé.

La zone LP contient 2 bits.

Si LP = 11, la lecture n'est pas protégée, elle est autorisée dans les parties 1 et 2 sans clé, (mémoire d'accès inexistante).

Si LP ≠ 11 la lecture est protégée et une clé est obligatoire pour lire les parties 1 et 2. Ce sera le cas de la plupart des opérations bancaires. (Toute lecture s'accompagne obligatoirement d'un bit d'accès pendant du bit d'erreur ceci afin de rendre symétrique le fonctionnement du support d'information).

La zone EP contient 2 bits.

Si EP = 11 l'écriture n'est pas protégée. Dans ce cas, la mémoire est utilisée comme moyen de stockage sans protection. Ce cas est par exemple celui où la mémoire est vierge avant la création du support d'enregistrement.

Si EP est différent de 11 une clé est obligatoire pour écrire dans la partie 1 de la mémoire physique.

La mémoire d'application est composée de la mémoire d'identification et de la mémoire financière. Les informations de la mémoire d'identification se répartissent dans les parties 0 et 2. La mémoire d'identification en partie 0 se compose essentiellement d'une mémoire d'erreur et d'une mémoire d'accès. La mémoire d'erreur mémorise un bit d'erreur chaque fois qu'une mise en fonctionnement du support d'information est réalisée avec une clé fausse. Les bits d'erreur sont inscrits aux adresses croissantes à partir de l'adresse ADE. Lorsque la zone de débordement DEBE est inscrite le support d'information est invalidé.

La mémoire d'accès n'existe que si la lecture du support d'information est protégée (LP # 11) ce qui sera le cas dans la plupart des applications bancaires. A chaque lecture accompagnée d'une clé bonne le microprocesseur inscrit un bit d'accès après le précédent. Les bits d'accès sont inscrits à partir de l'adresse ADA. Lorsque la zone DEBA est atteinte le support d'information est invalidé et aucune lecture ne peut avoir lieu.

La mémoire d'identification peut contenir en plus les zones suivantes .

Une zone "plein" indiquant que la carte est pleine et qu'aucune écriture n'est possible.

Une zone "clés" contenant le code de la clé du banquier et celui du client. La clé n°1 est par exemple attribuée au banquier alors que la clé n°2 est attribuée au client.

Une zone VALC 1 permet de définir la validité de la clé n°1 si VALC1 # 11 la clé est valide.

Une zone VALC 2 permet de définir la validité de la clé n°2 si VALC2 # 11 la clé est valide.

Dans le cas où LOCK est différent de 11 la clé n°1 permet seule l'écriture de toute information pouvant augmenter la capacité d'achat du support d'information, en particulier toute forme de crédit. Par contre la clé n°2 est utilisée par le propriétaire du support d'information pour valider les opérations de débit, (lectures ou écritures protégées).

La mémoire d'identification en partie 2 de la mémoire physique, commence immédiatement avant la mémoire de définition (zone type) dans le sens des adresses décroissantes. Cette zone de longueur variable permet de stocker des informations de façon permanente. Elle comprend :
- une zone adresse contenant le pointeur ADT contenant l'adresse de départ de la zone de travail et le pointeur ADL contenant l'adlresse de la zone de lecture;
- une zone RIB correspondant au relevé d'identité bancaire et la date d'émission du support d'enregistrement;
- une zone NOM correspondant au nom du titulaire du support d'enreegistrement;
- une zone "montant" à n bits;
- une zone unité "U", permettant avec la zone montant de connaître le montant initial du support d'enregistrement.

Par exemple si la zone unité vaut 500 F, le montant initial que pourra contenir le support d'enregistrement sera de $(2^n-1)$. 500 Francs.

La mémoire financière et implantée en zone de travail dans la partie 1 de la mémoire physique entre les adresses ADT et ADL. Les débits s'inscrivent directement à partir de l'adresse ADT dans le sens des adresses croissantes. Les crédits s'inscrivent à partir de l'adresse ADL dans le sens des adresses décroissantes ainsi débits et crédits remplissent la mémoire au fur et à mesure en progressant l'un vers l'autre.

Compte tenu des applications envisagées, les fonctionnalités du dispositif représenté sur la figure 4 peuvent se résumer ainsi :

- lecture et écriture séquentielle de la mémoire 421 dans les zones autorisées à partir d'une adresse donnée;

- acquisition et contrôle d'une clé d'habilitation par comparaison avec un mot inaccessible extérieurement au support d'information et écrit en zone secrète de la mémoire d'application;

- autorisation ou interdiction des lectures et des écritures;

- autocontrôle systématique des écritures dans la mémoire;

- commande de mémorisation interne des erreurs et/ou des réussites d'accès;

- mise hors service des fonctions précédentes par un nombre d'erreur fixé dans la partie 0.

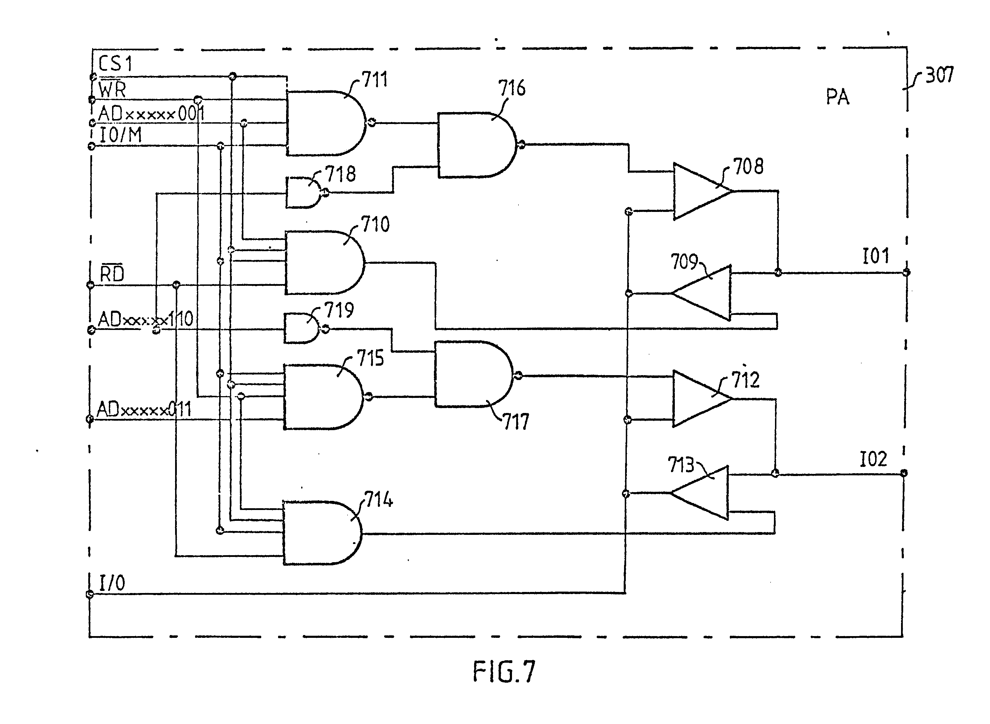

La figure 7 est une représentation du circuit PA7 de la figure 4. Ce circuit se compose des amplificateurs états 708, 709, 712 et 713, munis de leurs portes de commande. La sortie de l'amplificateur 708 est reliée à l'entrée de l'amplificateur 709, ces deux amplificateurs sont connectés au conducteur IO1 de façon à pouvoir utiliser l'amplificateur 708 pour transmettre les données présentes sur la ligne (I/O), sur le conducteur IO1 et utiliser l'amplificateur 709 pour recevoir les données transmises sur le conducteur IO1 pour les retransmettre sur la ligne I/O.

De même, la sortie de l'amplificateur 712 est reliée à l'entrée de l'amplificateur 713; deux amplificateurs sont connectés au conducteur IO2 de façon à utiliser l'amplificateur 712 pour transmettre les données présentes sur la ligne I/O sur le conducteur IO2 et utiliser l'amplificateur 713 pour recevoir les données transmises sur le conducteur IO2 et les transmettre sur la ligne I/O. Les conducteurs IO1 et IO2 assurent la liaison avec chacune des entrées 6 des supports amovibles, et la ligne I/O assure la liaison à la ligne de donnée du microprocesseur 301. L'ensemble des portes "non et" 711, 716 et 718 commande l'amplificateur 708 lorsque celles-ci sont commandées soit par la combinaison XXXXX001 reçue par l'organe de commande 6, par le signal IO/M émis par le microprocesseur 301, par le signal WR émis par le microprocesseur 301 et par le signal CS1 émis par le registre d'état 305, ou soit par la combinaison ADXXXX110 reçu par l'organe de commande 6. La combinaison ADXXXXX110 est utilisée pour la transmission du code aléatoire E émis par le générateur de code aléatoire GE310. La combinaison XXXXX001 est utilisée pour commander les autres opérations d'écriture dans chacun des supports amovibles.

Les portes 710 et 714 commandent respectiviement les amplificateurs 709 et 713 et sont utilisées pour commander les opérations de lecture des informations dans chacun des supports amovibles 102 et 104.

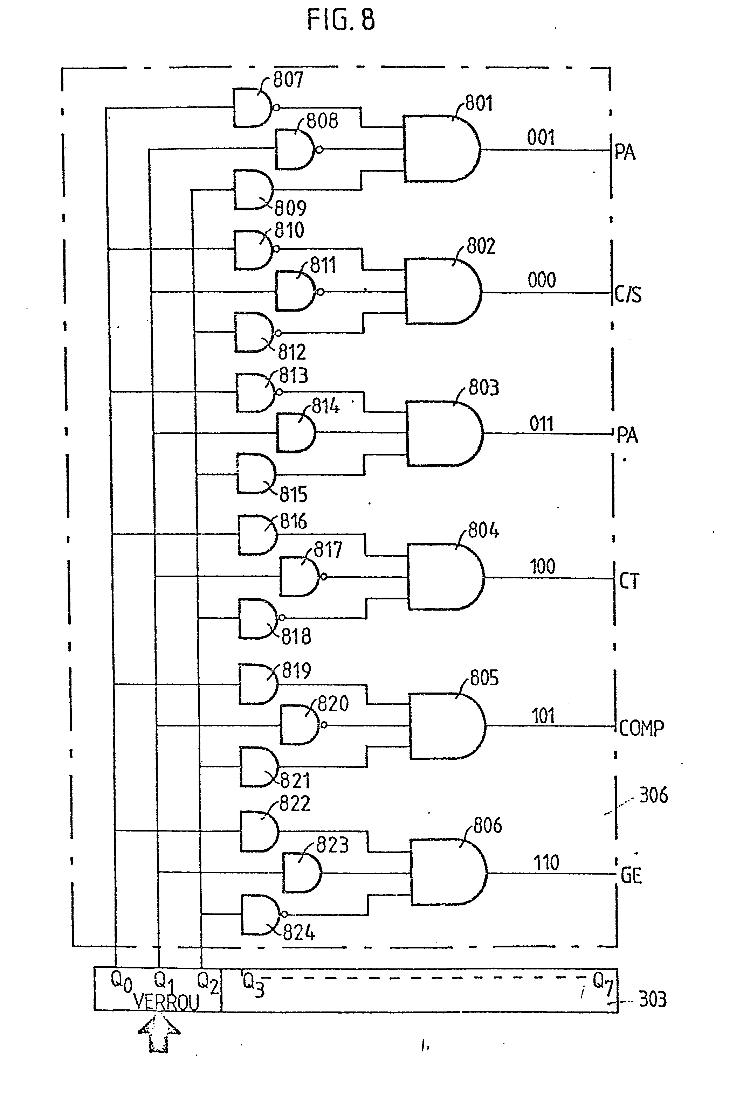

La figure 8 montre une réalisation de la logique de commande 306. La sortie de la porte "et 801" commande la porte PA307 lorsque les sorties Q0 Q1 et Q2 du registre 303 ont la combinaison binaire Q0* Q1* Q2. La sortie de la "porte et" 802 commande le registre d'état C/S pour la combinaison Q0*.Q1*.Q2*. La sortie de la porte "et 803" commande la porte PA307 pour la combinaison Q0*.Q1*.Q2. La sortie de la porte "et 804" commande le compteur CT 304 pour la combinaison binaire Q0.Q1*Q2*. La sortie de la porte "et 805" commande le comparateur 309 pour la combinaison Q0.Q1*.Q2 et enfin la sortie de la porte 806 commande le générateur de code aléatoire GE310 pour la combinaison binaire Q0.Q1.Q2*.

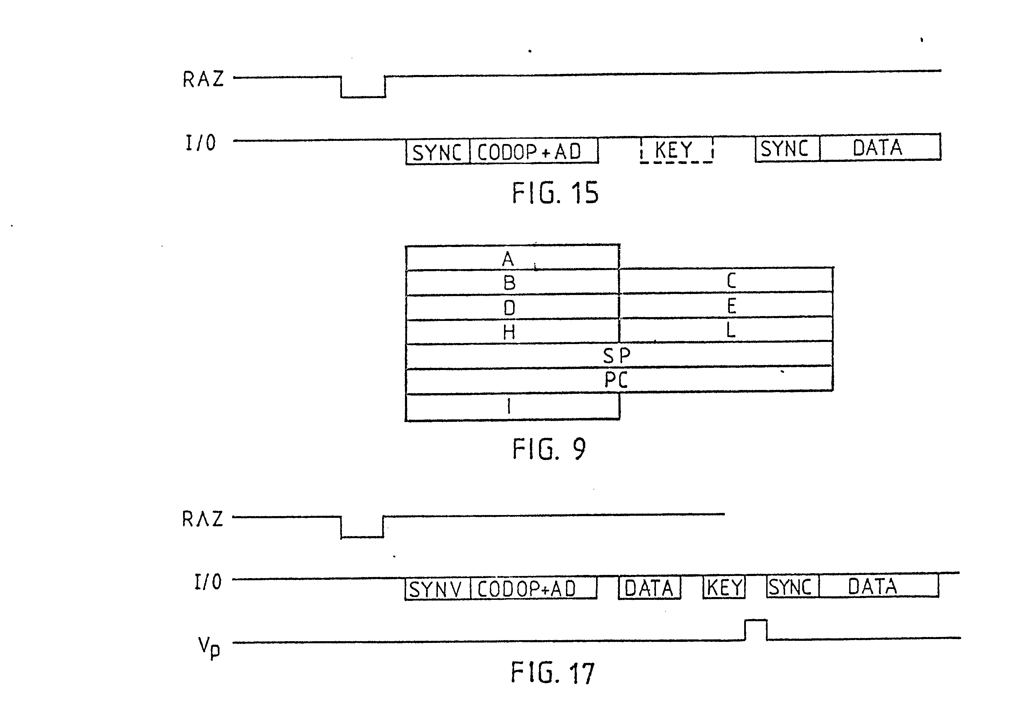

La figure 9 montre une représentation des registres de travail contenus dans un microprocesseur de type 8080 ou 8085 utilisés dans la réalisation du microprocesseur 301. Le registre A correspond à l'accumulateur.

Les registres B, C, D, E sont des reegistres de travail et sont spécialisés pour recevoir des données. Les registres H et L sont des registres d'adresse. Le registre SP contient l'adresse d'une registre de pile et est utilisé lors des interruptions de traitement pour pointer vers l'adresse d'une pile en mémoire pour sauver le contenu de certains registres du microprocesseur ou pour reprendre des traitements interrompus. Le registre PC est le compteur de programme et permet dans l'exécution d'un programme le passage à l'instruction suivante. Le registre I est un registre d'index qui permet l'adressage de données par indexation.

Les détails relatifs à la fonctionnalité de ces registres sont donnés dans le livre intitulé "les microprocesseurs" de Pierre Le Beux et Rodnay Zaks édité par la société d'édition Sybex - 313 rue Lecourbe 75015 PARIS - C 1977.

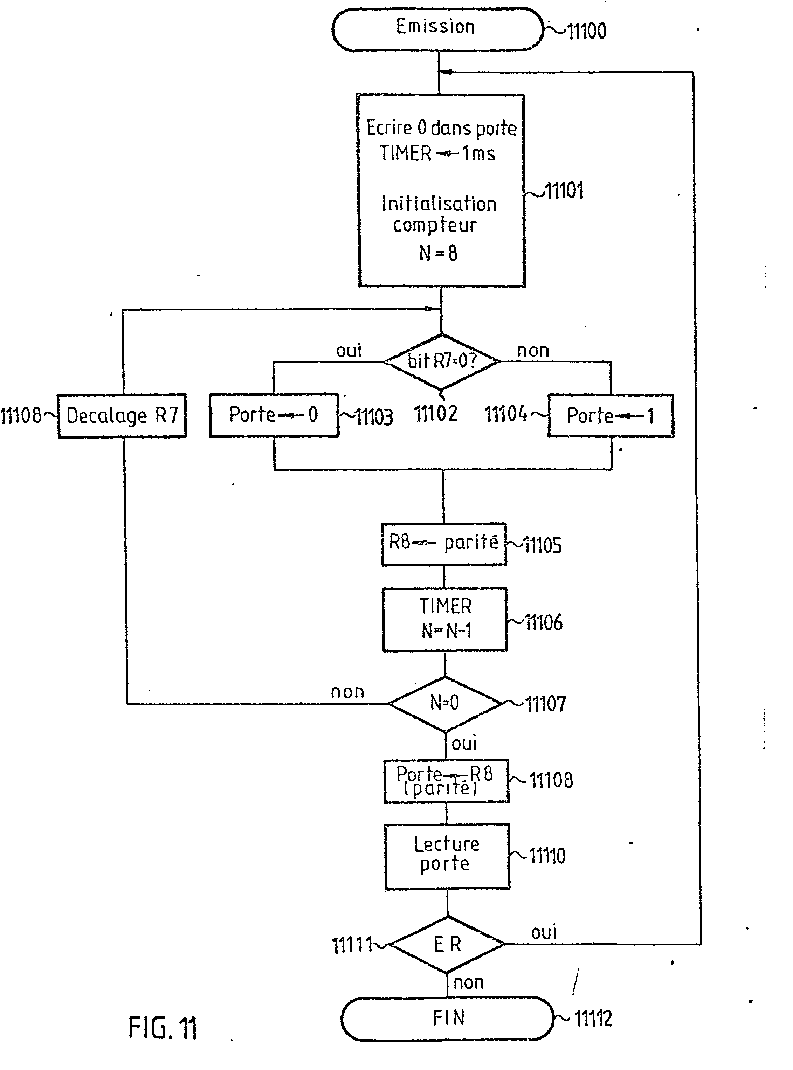

La figure 10 représente l'évolution dans le temps d'un message transmis sur les conducteurs IO1 et IO2. La transmission d'un message s'effectue en mode série et comporte 8 octets transmis sur 10 moments. Le premier moment est utilisé à transmettre le signal de début de message ou signal START, les moments 2 à 9 sont utilisés pour la transmission du message proprement dit, et le 10ème moment transmet le bit de parité du message.

Le récepteur reçoit les signaux transmis dans ces 10 moments et effectue un contrôle de parité pendant le 11ème. Le récepteur signale à l'émetteur qu'il est prêt à recevoir un message en positionnant le conducteur 13 à un potentiel VO (signal PR ). Ce signal est positionné au moins un moment avant l'émission du signal START. Après réception et contrôle, le récepteur positionne l'état des conducteurs IO1 ou IO2 à un potentiel V1 pendant la durée d'un moment, si le contrôle de parité effectué sur le message révèle qu'il y a eu erreur, on revient au potentiel VO de départ si la transmission a eu lieu correctement.

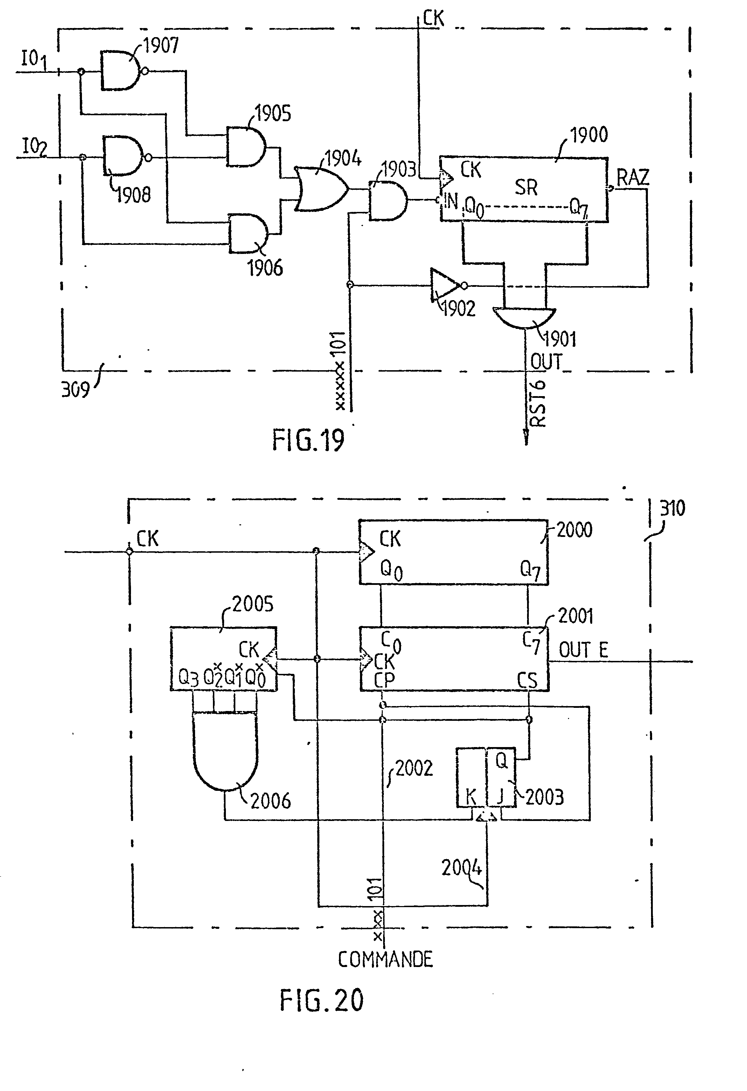

Le comparateur 309 est représenté à la figure 19. Il se compose d'un registre à décalage SR1900 dont la progression est cadencée par le signal d'horloge CK transmis par la sortie CLK du microprocesseur 301. Les bits d'information entrent par son entrée IN et sont émis à la sortie de la porte ET 1903 dont une entrée est commandée par la combinaison XXXXX101 appliquée à l'entrée de l'organe de commande 306 et dont l'autre entrée est commandée par la sortie de la porte OU 904.

La porte OU 1904 reçoit sur une première entrée le résultat de l'opération "et" logique formée sur le complément des bits d'information présents sur les lignes IO1 et IO2 et sur une deuxième entrée le résultat d'opération "et" logique formée sur la valeur vraie des bits d'information présents sur les lignes IO1 et IO2. Ainsi, lorsqu'à un instant donné, les deux bits présents sur les lignes IO1 et IO2 ont la même valeur, un bit d'information de valeur 1 logique est transmis à l'entrée du registre à décalage SR 1900 par contre lorsque les valeurs des deux bits sur les lignes IO1 et IO2 sont différentes, un zéro est alors transmis à l'entrée du registre à décalage SR 1900. Dans le cas de la transmission simultanée d'un octet d'information sur chacune des lignes IO1 et IO2, l'égalité entre ces octets est réalisée lorsque tous les bits à mémoriser à l'extérieur du registre SR 1900 ont tous la valeur 1. Cette égalité est détectée à la sortie de la porte ET 1901 dont chaque entrée est reliée respectivement à chaque sortie du registre SR 1900 et dont la sortie est reliée à l'entrée RST6 du microprocesseur 301 de façon à provoquer une interruption de traitement de ce dernier.

Le générateur de code aléatoire 310 est représenté à la figure 20. Il se compose d'un compteur binaire, en anneau 2000 dont la progression a lieu sous la commande des signaux d'horloge CK émis à la sortie CLK du microprocesseur 301 et d'un registre à décalage 2001 dont les entrées parallèles C à C7 sont reliées aux sorties Q0 à Q7 du compteur 2000.

L'état du compteur 2000 est transféré dans le registre à décalage 2001 lorsque la combinaison XXXXX110 est appliquée à l'entrée de la logique de commande 306. Cet état est ensuite transféré en série par la sortie OUT du registre à décalage 20001 sur la ligne I/O du moyen de traitement 115 lorsque l'entrée de commande série C5 est commandée par la sortie Q du basculeur 2003. Le basculeur 2003 est commandé par la combinaison XXXXX110 et est remis à l'état zéro lorsque les 8 bits qui composent le signal E ont été transférés. Le nombre de bits transférés est compté par le compteur 2005 qui commande par l'intermédiaire de la porte ET 2006 la remise à zéro du basculeur 2003.

Les 8 bits d'information, constituant un octet et transférés en série sur les conducteurs IO1 et IO2, sont rangés successivement dans le registre R7 de la mémoire RAM2 ou dans le registre R7 de la mémoire non volatile 421 lorsqu'ils sont reçus par le microprocesseur récepteur.

Ce transfert s'effectue par lecture successive des portes PA307, transfert successif dans le registre accumulateur du microprocesseur récepteur et transfert après alignement du registre accumulateur dans le registre R7 de la mémoire RAM2 ou de la mémoire 421. A chaque nouveau bit transféré un bit de parité est calculé en tenant compte de la parité des bits déjà reçus, le résultat du calcul est consigné dans le registre R8 de la mémoire RAM2. Le bit de fin de message qui sert aussi de bit de parité pour le message transmis est comparé au bit de parité calculé et mémorisé dans le registre R8, s'il y a égalité de valeur entre les deux bits la transmission sera reconnue comme correcte, sinon, cette anomalie sera signalée au processeur émetteur par émission au niveau du récepteur du signal ER.2

L'organigramme de la figure 11 représente les différentes étapes nécessaires au déroulement du programme exécuté par le microprocesseur émetteur. A l'étape 11101 le microprocesseur émetteur positionne les lignes IO1 ou IO2 de liaison à l'état 0 logique et change le compteur de temps CT à la valeur du temps nécessaire pour l'émission du signal START et de l'octet qui suit, de la façon représentée sur la figure 10. La fin de l'émission du signal START provoque une interruption du microprocesseur. L'octet à transférer contenu dans le registre R7 de la mémoire RAM2 ou de la mémoire 421 est alors chargé dans le registre accumulateur du microprocesseur émetteur pour tester la valeur du premier bit (étape 11102). La porte PA7 ou 426 transmet la valeur correspondante du premier bit lu dans le registre R7 sur les conducteurs IO1 ou IO2 aux étapes 11103 et 11104. A l'étape 11105 le bit de parité correspondant au message à transmettre est calculé et transmis dans une position de bit du registre R8 de la mémoire RAM2 ou de la mémoire 421. A l'étape 11108 le contenu du registre R7 est décalé d'une position binaire vers la gauche.

Ce processus se reproduit à chaque signal d'interruption délivré par le compteur de temps, il se termine lorsque tous les bits de l'octet ont été successivement transférés. L'étape 11107 consiste à vérifier que tous les bits ont été transférés. A l'étape 11109 le bit de parité mémorisé dans le registre R8 est à son tour transféré. Le récepteur peut alors comparer la parité des bits de l'octet reçu, au bit de parité qu'il a également reçu. S'il y a coïncidence le cycle de transmission s'achève (étape 11112). S'il n'y a pas coïncidence, le récepteur signale à l'émetteur qu'il y a erreur (signal ER figure 10) et un nouveau cycle de transmission est exécuté à partir de l'étape 11101.

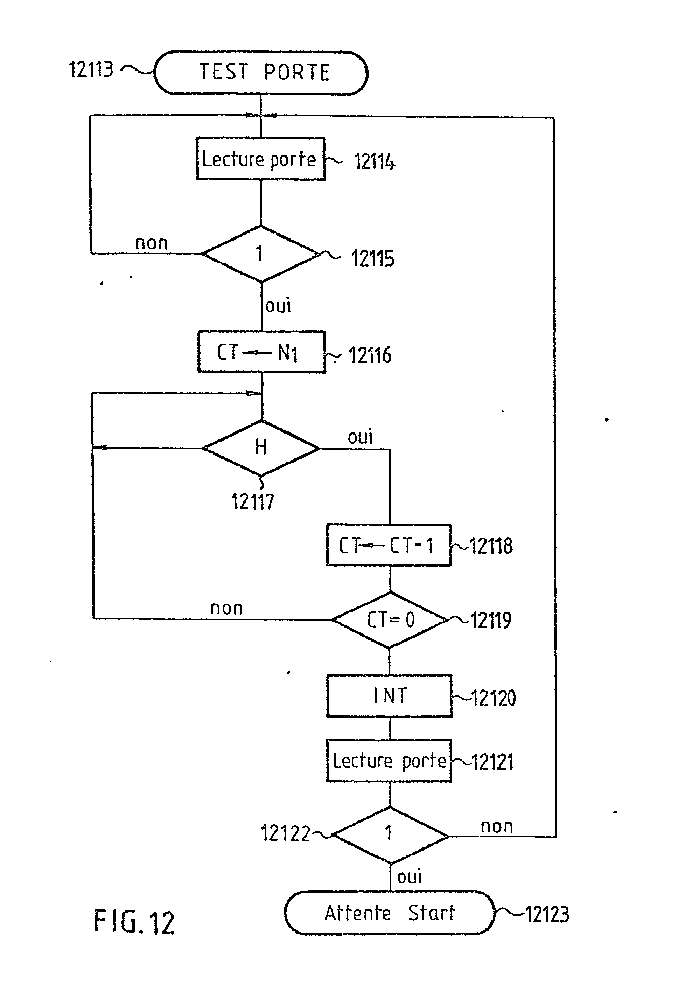

La figure 12 est un organigramme montrant les opérations effectuées par le récepteur lorsqu'il est en attente d'un message en provenance de l'émetteur. Ces tests se font par lectures répétées de l'état des lignes de transmission IO1 ou IO2. A l'étape 12114, les portes PA307 ou la sortie de l'amplificateur 425 est lue de façon répétée tant que l'état de la ligne IO1 ou IO2 est à 0. Lorsque l'état de la ligne devient 1 (étape 115) le compteur CT4 est chargé à une valeur de temps prédéterminée (étape 12116) de façon à occasionner une interruption du traitement du microprocesseur et provoquer une lecture de l'état de la porte PA7 ou de l'amplificateur 425 lorsque cette valeur de temps est épuisée. Ce test a lieu à l'étape 12122. Si à cette étape, l'état de la porte est à 1, le récepteur se met en attente du signal START, par contre, si l'état de la porte est à 0 il faut en conclure que le test effectué à l'étape 12115 a eu lieu sur un parasite, le récepteur retourne alors à l'étape 12114.

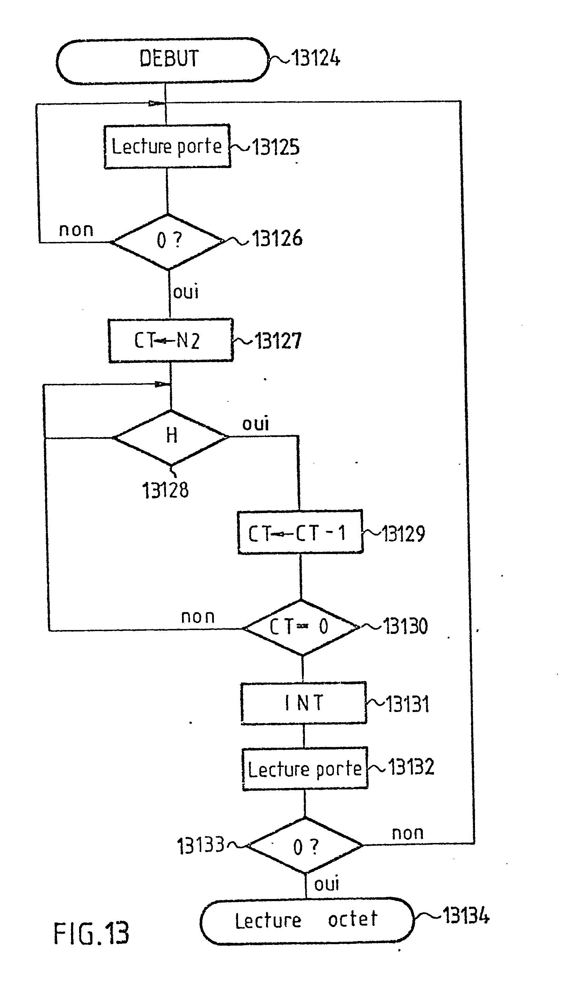

La figure 13 est une représentation de la séquence de réception du signal START. A l'étape 125 le récepteur lit l'état de la porte PA7 ou de l'amplificateur 425. Le compteur de temps CT4 est chargé à une valeur de temps prédéterminé $N_2$ dès que l'état d'un conducteur IO1 ou IO2 prend la valeur 0. Cette valeur de temps est décrémentée à l'étape 13129 au rythme de l'horloge interne du microprocesseur jusqu'à atteindre la valeur 0 (étape 12130). Le passage à zéro du compteur CT provoque une interruption du microprocesseur qui effectue alors une opération de lecture de la porte PA307, ou de la porte 425, si à cet instant de la séquence le conducteur IO1 ou IO2 présente toujours la valeur 0, il y a confirmation qu'il s'agit bien d'un signal START et non d'un parasite, la lecture de l'octet (étape 13134) pourra alors s'effectuer.

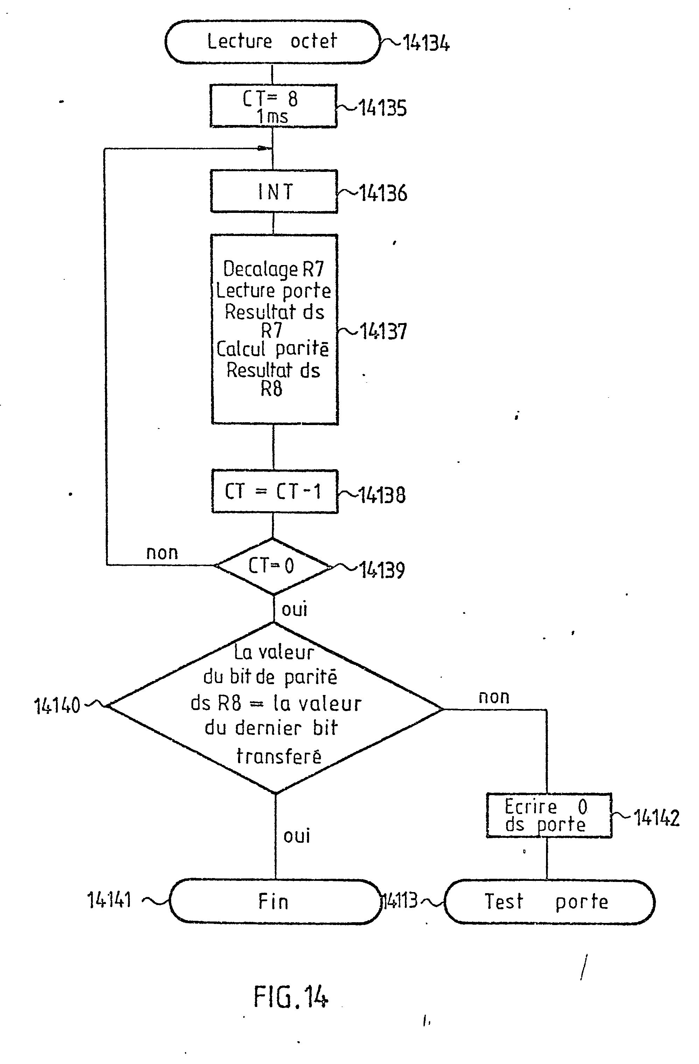

La figure 14 est une représentation de la séquence de lecture d'un octet. Le compteur de temps CT4 est chargé à une valeur de temps correspondant au temps nécessaire à la lecture des 8 bits transmis. Si la durée d'un bit est de 1 ms, la valeur du temps de transmission chargée dans le compteur CT4 est de 8 ms. Chaque transfert d'un bit provoque une interruption du microprocesseur récepteur (étape 14136) pour l'autoriser à mémoriser dans le registre R7 le bit lu sur la porte PA7 ou sur l'amplificateur 425, effectuer un calcul de parité sur les bits déjà reçus avec celui qui vient d'être reçu et charger le résultat de calcul de la parité dans le registre R8 (étape 14137). Lorsqu'un octet a été transféré dans le registre R7, le compteur CT prend l'état 0 en même temps qu'est reçu le bit de parité transmis par l'émetteur. Une comparaison a alors lieu entre le bit transféré par l'émetteur et le bit précédemment calculé et mémorisé dans le registre R8 du récepteur (étape 14140). S'il y a correspondance entre les 2 bits de parité, la transmission s'est effectuée sans erreur et est considérée comme terminée, par contre s'il y a une différence d'état entre les 2 bits de parité, il y a erreur de transmission, cette erreur est signalée à l'émetteur en forçant à l'état 0 le conducteur IO1 ou IO2 étape 142 et la séquence de test de l'état de la porte PA7 ou de l'application 425 est reprise (étape 113).

Le système de scrutation de l'état du conducteur IO1 ou IO2 et de délivrance des signaux d'interruptions permet la synchronisation de l'envoi des messages à l'émission sur le fonctionnement de la station qui reçoit. On réalise ainsi un double niveau d'asynchronisme qui est indépendant des fonctions traitées au niveau de chaque station, car en dehors des périodes d'interruption, les stations peuvent se livrer à l'exécution d'autres tâches complètement indépendantes les unes des autres, et indépendantes des programmes du récepteur puisque les interruptions peuvent être produites à tout instant.

Les séquences qui viennent d'être décrites pourront être réalisées à l'aide de la liste des instructions suivantes inscrite dans la mémoire PROM7bis de la figure 3 ou dans la mémoire 420 du support amovible utilisant les instructions du microprocesseur INTEL 8080 ou 8085.

EMISSION

| Instructions | | Commentaires |
|---|---|---|
| 100 | OUT PA | Porte A ←—0 |
| 101 | LHLD | |
| 102 | MOVA,M | (Initialisation du compteur CT4) |
| 103 | MOV CT,A | CT ←— A |
| 104 | LHLD | |
| 105 | MOV B,M | B ←—0 |
| | INT | (Interruption compteur de temps) |
| 106 | LDA | A ←—8 |
| 107 | SBB B | |
| 108 | JZ NEXT (113) | |
| 109 | LDA | A ←—R7 |
| 10A | OUT Porte A | |
| 10B | MOV C,A | C ←— A |

```
10C    ANA                          Masque 1 000 000
10D    XRA,M                        Calcul de parité A
                                    A_0 ←——— R_8 + A_0

10E    LHLD
10F    MOV M,A                      parité dans R8
110    MOV A,C                      A ←——— R7
111    RLC                          décalage R7
112    MOV M,A                      R7 ←——— A
113    LDA                          A ←——— R8
114    OUT Porte A
115    NOP
116    IN PORTE A
117    CPI                          Si 1 = Erreur
118    JNC   NEXT (100)
119    RET                          Fin
```

Test Porte

```
11A    IN    Porte A               A_0 ←——— Etat de PA7
11B    CMP M                        Comparer A_0 à 1
                                    faire S=1 dans PSW si #
11C    RM   NEXT=(11A)             si S=1 retour en 11A
11D    LHLD                         Charger H,L avec le
                                    contenu de la mémoire
                                    trouvé aux adresses
                                    qq et PP. A    N
11F    MOV CT,A                     CT ←——— N
120    RET
```

START

```
121    IN    Porte A
122    CMP M                        Faire S ←— 1 dans PSW
                                    si #
123    RM   NEXT (121)             Retour en 121 si S = 1
```

```
124    LHLD
125    MOV A,M
126    MOV CT,A
127    RET


INT. START


128    PUSH PSW          Sauver A et PSW
129    IN   PORTE A
12A    CMP   M           Faire Z=0 de PSW
                         si porte = 0
12B    RM    NEXT (128)  Si Z=1 retour en 128
12C    CNZ   Lecture Octet


LECTURE OCTET


12D    LHLD
12E    MOV A,M
12F    MOV CT,A
130    LX1 B             B ←── 0
131    RET
       INT
132    LHLD
133    MOV A,M
134    RLC
135    MOV D,A
136    IN Porte A
137    MOV E,A
138    LHLD              Adressage de R8
139    XRA               Parité dans A
13A    MOV M,A           Parité dans R8
13B    MOV AE
13C    ORA  D
13D    LHLD              Adressage de R7
13E    MOV M,A           R7 ←── A
```

```
13F    INX B
140    LDA                        A ←——8
141    SBB B
142    JP                         Z ←——1 de PSW sur = 0
143    RET
144    MOV A,E
145    LHLD                       Adressage de R8
146    CMP M
147    JZ    NEXT(149)            Faire Z=1 ds PSW s'il y
                                  a égalité
148    Fin
149    OUT porte A
150    CALL test porte
```

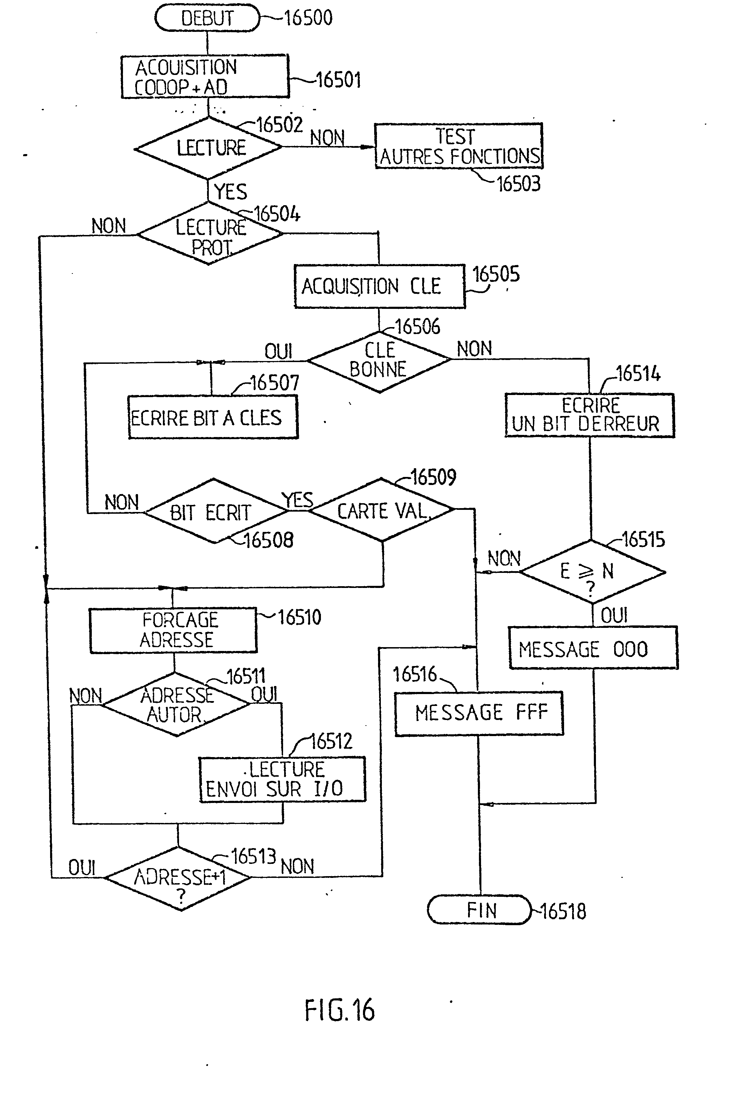

Les figures 15 et 16 illustrent le fonctionnement en mode de lecture mémoire. Sur le diagramme de la figure 15, le signal de RAZ initialise la logique de commande 416 qui autorise le transfert du message arrivant sur la ligne I/O dans le registre T.

L'ordre de lecture se présente sous la forme d'un signal SYNC qui précède le code opération CODOP et les bits d'adresse AD. Les codes utilisés sont naturellement à définir pour chaque application.

L'ordre CODOP et l'adresse sont reçus par l'unité de traitement qui doit reconnaître par un test sur le mot CODOP et les bits LP qu'il s'agit d'une opération de lecture et si la lecture est protégée ou simplement autorisée. Sur le diagramme de la figure 16, l'acquisition du message CODOP + AD figure à l'étape 16501, le test a lieu aux étapes 16502 et 16504. S'il s'agit d'une opéraion de lecture non protégée, le registre 411 de la figure 4 est chargé à l'étape 16510 par le mot d'adresse qui suit l'envoi de COCOP sur la ligne I/O, puis à l'étape 16511 des tests sont effectués pour vérifier que l'adresse de lecture se trouve bien dans la zone de mémoire autorisée. En particulier, le microprogramme inscrit dans la mémoire de commande 420 viendra vérifier que le mot d'adresse reçu est plus grand que l'adresse AD puisque seule une lecture externe est autorisée dans les parties 1 et 2 de mémoire physique. Si l'adresse est plus grande que l'adresse ADT la donnée est alors lue dans la mémoire 421 puis chargée dans le registre 412 pour être ensuite transmise par l'intermédiaire du bus 434 sur la ligne I/O de sortie. Le registre d'adresse est ensuite incrémenté ou décrémenté de une unité suivant le contenu du code CODOP par rebouclage du programme à l'étape 16510. Si l'adresse AD est plus petite que l'adresse ADT (adresse dans la partie 0) le registre d'adresse 411 est incrémenté d'une unité jusqu'à ce que son contenu atteigne la valeur ADT. De cette façon, toute la mémoire sauf la partie 0 peut être lue par un appareil connecté au support d'information dans le sens croissant ou décroissant des adresses.

Si la lecture est protégée les tests effectués sur le "CODOP" et les bits LP doivent coïncider et dans ce cas l'acquisition d'une clé à l'étape 16506 est nécessaire. Dans le cas d'un distributeur de billet où deux clés sont nécessaires, le contenu du code CODOP spécifie le type de clé qui doit être utilisé pour que l'opération de lecture puisse se réaliser. La clé reçue sur la ligne I/O est alors comparée à l'une des deux clés contenues dans la mémoire d'identification. S'il y a coïncidence, la clé transmise est bonne et un bit est alors inscrit dans la mémoire d'accès (étape 16507), un contrôle sur l'écriture de ce bit est ensuite effectué à l'étape 16508 et un retour à l'étape 16507 est nécessaire si le bit n'est pas écrit. Dès que l'écriture a effectivement eu lieu des tests sur les zones DEBAC, ERREUR et PLEIN sont effectués à l'étape 16509 pour vérifier que le support d'information est toujours valide. Dans le cas où le support d'information ne serait pas valide une émission d'un code 000 aura lieu sur la ligne I/O. Si le support est reconnu par le programme, l'adresse AD est forcée dans le registre d'adresse 1 et les étapes 16510 et 16513 sont exécutées.

Dans le cas où à l'étape 16506 la clé reçue sur la ligne I/O s'avère fausse un bit d'erreur est alors mémorisé dans la mémoire d'erreur (étape 16514). Lorsque le bit d'erreur est inscrit un test a lieu à l'étape 16515 pour vérifier si le nombre d'erreurs enregistrées n'est pas supérieur au nombre N d'erreurs autorisées. Si le nombre est inférieur le message FFF est alors émis sur la ligne I/O par contre, s'il est supérieur le message 000 sera alors émis sur la ligne I/O et le support d'information sera invalidé.

Par le processus de lecture du support d'information qui vient d'être décrit, on voit que l'utilisateur perçoit toujours un fonctionnement du support d'information constant quel que soit l'usage bon ou mauvais de la clé d'accès. D'autre part, l'écriture d'un bit d'accès ou d'un bit d'erreur dans la mémoire dans chacune des éventualités clé bonne ou mauvaise se traduit toujours par une même consommation de courant électrique par le support d'information, de ce fait un fraudeur qui contrôlerait l'intensité de courant de la carte verra toujours une consommation constante quel que soit l'usage d'une clé bonne ou mauvaise.

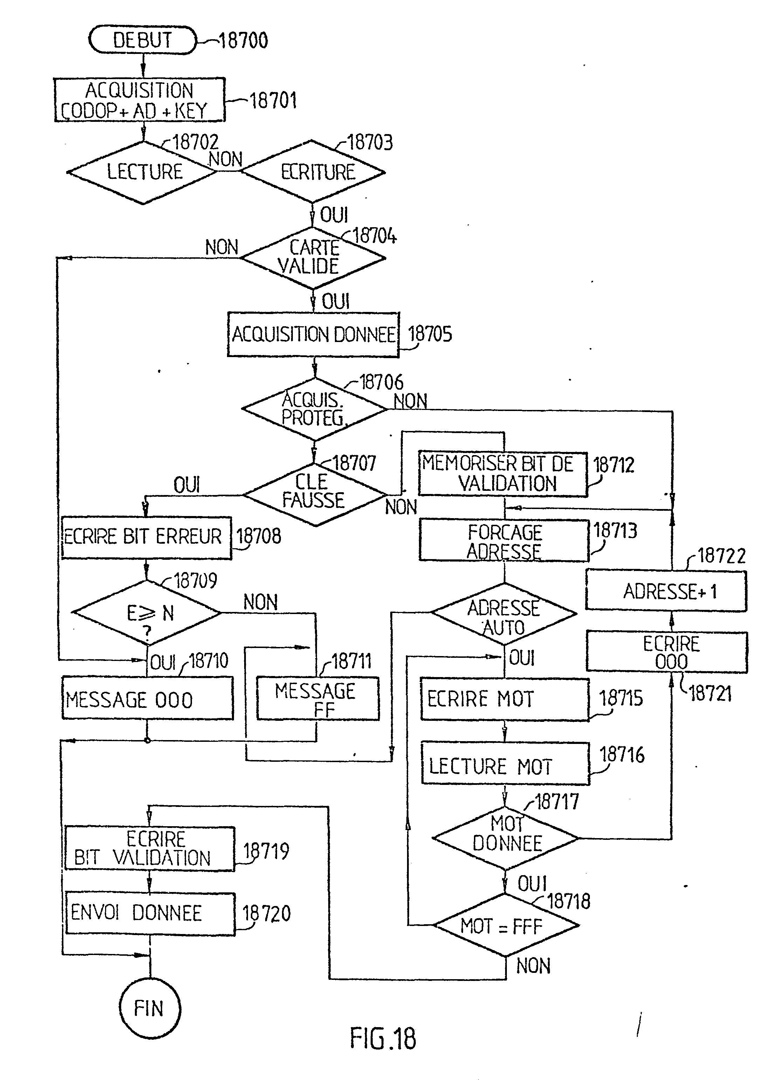

Les figures 17 et 18 illustrent le fonctionnement d'un support d'information en mode écriture mémoire. Sur le diagramme de la figure 17 le signal de RAZ initialise la logique de commande 416 et le transfert dans le registre T424 des informations présentes sur la ligne I/O. L'ordre d'écriture se présente sous la forme d'un signal SYNC précédant un code opération "CODOP" suivi des bits d'adresse AD de donnée et d'une clé si l'écriture est protégée. Le signal VP est ensuite transmis pour permettre l'écriture de la donnée dans la mémoire 421 du support d'information. Pour que l'utilisateur ait la certitude que la donnée transmise sur la ligne I/O a bien été inscrite dans le support d'information, la donnée inscrite en mémoire est relue et réémise à destination de l'utilisateur sur la ligne I/O. Le code "CODOP" est naturellement spécifique de chaque application. Sur l'organigramme de la figure 18 l'ordre CODOP et l'adresse AD suivi ou non d'une clé sont reconnus par le support d'information par un test qui a lieu aux étapes 18702 et 18703. A l'étape 18704 un test de validité du support d'information est effectué sur les zones DEBE, DEBAC et PLEIN. Si le support d'information est reconnnu valide l'acquisition de la donnée a lieu à l'étape 18705.

S'il s'agit d'une écriture protégée, l'usage d'une clé est nécessaire et un test sur la clé est effectué à l'étape 18707. Si la clé est fausse, un bit d'erreur est écriot dans la mémoire d'erreur (étape 18708) puis un test est effectué à l'étape 18709 pour vérifier qu'il n'y a pas débordement de la zone d'erreur. Dans le cas où il y a débordement, le support d'information émet 1sur la ligne I/O le code 000 signalant que la carte est invalide (étape 18710). Dans le cas où il n'y a pas débordement le support d'information émet le message FFF sur la ligne I/O (étape 18711) signalant que la donnée n'a pas été écrite.

Si la clé est bonne un bit de validation est mémorisée à l'étape 18712 et l'adresse reçue est chargée dans le registre d'adresse 411 à l'étape 18713. Un contrôle a lieu à l'étape 18714 pour vérifier que l'adresse reçue est bien dans les limites autorisées de la mémoire physique, c'est-à-dire entre les adresses ADL et ADT. Si tel n'est pas le cas, le code FFF est émis sur la ligne I/O (étape 18711) signalant que la donnée n'a pas été inscrite en mémoire. Dans le cas où l'adresse est autorisée la donnée reçue sur la ligne I/O est transmise dans le registre 412 pour être écrite dans la partie 1 de la mémoire 421 (étape 18715). Une vérification a lieu aux étapes 18716, 18717 et 18718 pour vérifier que la donnée est bien écrite en mémoire. Un bit de validation est inscrit en mémoire une fois que la donnée est écrite à l'étape 18719 puis la donnée écrite est ensuite réémise sur la ligne I/O à l'étape 720.

Lorsque le support amovible a reconnu la validité de la clé (clé No 2 du client), il transmet à destination de l'unité de traitement 115 un code d'identification In (clé No 1 du client) qui lui est propre et qui le distingue de tous les codes d'identification des autres supports amovibles qui sont mis en service. Ce code d'identification In est déposé sur la ligne IO1 et sa validité est vérifiée par le moyen de traitement 115 par consultation d'une liste des codes d'identification autorisés contenus dans les moyens d'enregistrement 107 (les clients de plusieurs banques peuvent avoir accès au distributeur). Si le code d'identification est plausible, le générateur 310 émet sur les lignes I/O1 et I/O2 un code aléatoire E à destination de chacun des supports amovibles. Les microprocesseurs de chacun des supports amovibles 102 et 104 calculent alors un nombre R qui est une fonction du code secret S (code val C2 du banquier) du programme P et du code d'identification In résidant dans chacune des mémoires des supports amovibles et du nombre aléatoire E reçu de l'unité de traitement 115. Le nombre R est émis sur chacune des liaisons IO1 et IO2 à destination du comparateur 309 qui détecte une égalité entre les nombre R reçus si les paramètres (Programme P nombre secret S et code d'identification In sont identiques dans l'un et l'autre des supports amovibles). Le programme P pourra être divisé pour réaliser les opérations suivantes :

A. Faire une concaténation des nombres E et In

        Résultat R1

B. Faire un "OU exclusif" entre les nombres R et S résultat S1

C. Faire le produit des nombres S, S1 et R1    résultat R.

Les instructions sont les suivantes :

| Instructions | Commentaires |
|---|---|
| 1. Load   A ←——In | changer les registres |
| 2. Load   B ←——E | A,B,C avec les paramè tres In, E et S |
| 3. Load   C ←——S | |
| 4. MOV A B | Concaténation de In et E ——→ |
| 5. MOV T,A | résultat R1 dans le registreT |
| 6. XCT | Faire le "OU exclusif" entre les registres C et T    S1 = R ⊕ S |
| 7. MUL (T,C) | Multiplier S x S1 |
| 8. MUL (T,A) | Multiplier SxS1xR1   R |
| 9. Load $2^{64-1}$ ——→ D | si R ⩾ $2^{64} - 1$ |
| 10. Comp (T,D) | |

11. IF (1)                        Retourner en 1

12. End

Le code d'instructions utilisés pour la construction du programme P correspond à celui des microprocesseurs 8080 ou 8085 commercialisé par la Société INTEL.

L'usage des supports amovibles 102 et 104 permet d'obtenir un double accès de sécurité contre les fraudeurs qui demandent l'accès au distributeur. Le premier support amovible traite à l'aide de son moyen de traitement interne (220) des informations venant de l'extérieur en effectuant une corrélation entre celles introduites par les moyens d'interface (112), (111), (4) ou (5) et celles qu'il contient dans ses zones de mémoire (224) et (225) et qui ont été inscrites d'une manière indélébile au moment de sa construction et de sa mise en service. La corrélation est faite comme décrite précédemment au moyen d'un algorithme fixe ou non ou d'une clé d'accès généralement fixe.

La possession d'un dit support amovible suppose aussi la connaissance des informations et données nécessaires à fournir au système de distribution pour que la corrélation puisse s'établir dans le support amovible. Seul le porteur légitime du dit support amovible connaît les dites informations et données (224) qu'il a lui même introduites lors de la phase antérieure.

A cette première sécurité d'identification, s'ajoute une deuxième sécurité apportée par l'usage du second support amovible (104) connecté au système par le second moyen de connection (105) pouvant dialoguer avec le moyen de traitement de l'information (115) et ayant des caractéristiques semblables mais non toutes identiques au dit premier suport amovible (102). La présence de ce second support amovible (104) d'habilitation est nécessaire pour l'utilisation correcte du dit premier support amovible (102). comme décrit précédemmentchaque support amovible contenant dans sa mémoire un code secret S, un code d'identification $I_n$ et un programme P, les moyens de traitement de chacun des supports calculent la fonction $R = p(S, E, I_n)$ ou E est le code aléatoire émis par le générateur 310. Le comparateur compare la fonction R délivrée par chacun des suports pour autoriser ou non l'accès de la personne demanderesse au distributeur. On notera que dans un autre mode de réalisation de l'invention, l'invention purra être obtenue pour la génération du code aléatoire E par programmation des moyens de traitement 15 du distributeur.

Les moyens de mémorisation 107 et 109 et les moyens d'enregistrement 113 et 114 ainsi que les liaisons associées à l'unité de traitement 115 n'ont pas besoin d'être décrits plus en détail pour la réalisation de l'invention, ils pourront être constitués par tout type d'unité périphérique d'enregistrement de donnée utilisé dans les systèmes de traitement de l'information. Ils seront par exemple constitués par des unités de mémoire à disques ou des unités de bandes magnétiques ou encore des imprimantes; des détails sur la constitution de ces unités sont décrits dans le livre intitulé "peripheral devices" d'Ivan Flores et édité par Practice Hall Inc Englewood Cliffs New Jersey Copyright 1973. Les moyens 11 d'affichage sont bien connus de l'homme de l'art ainsi que le moyen 12 d'entrée des informations qui peut être un simple clavier.

De même, le moyen de distribution d'objet ou de service peut être du type de celui décrit dans le brevet des Etats-Unis 4 166 945.

Les programmes 17 et 18 sont quand à eux mémorisés dans la mémoire ROM 31 du moyen de traitement de l'information 15.

Le fonctionnement du distributeur qui vient d'être décrit est le suivant. L'usager titulaire d'un support amovible (102) introduit ce dernier dans le premier moyen de connexion (101) réservé à cet effet. Suivant les instructions données par l'intermédiaire des moyens d'interface (111) réalisés communément par un affichage de message, l'usager introduit dans le système par l'intermédiaire du moyen d'interface 112 (clavier) les données nécessaires à l'ouverture et à la poursuite du dialogue (103) entre son support amovible (102) et le moyen de traitement de l'information (115). Au début du dialogue (103) le moyen de traitement de l'information (115) fait transiter les informations données par l'usager de l'interface 111 et 112, dans son support amovible (102). Les moyens de traitement du support amovible (102) établissent s'il y a corrélation ou non entre les dites informations introduites et celles qui lui sont propres (224) et qui ont été introduites dans une phase antérieure. Une consultation préalable des informations mémorisées dans les moyens de mémorisation de sécurité (107) peut avoir lieu pour vérifier les droits du titulaire du support amovible à utiliser les services du distributeur et à l'issue de laquelle le distributeur peut rejeter le support amovible. Dans le cas où la corrélation faite à l'aide du moyen interne de traitement de l'information (220) est trouvée bonne, le support amovible par l'intermédiaire de son moyen de décision (222) retourne un compte-rendu de bonne corrélation au moyen de traitement de l'information (115) par les moyens de dialogue 103, 119 et 221. La séquence pourra alors se poursuivre.

Le cinquième moyen d'enregistrement 114 permet à l'usager de recevoir des informations spécifiques à la distribution demandée, tandis que le moyen d'enregistrement semblable (113) fournit au prestataire de service ou fournisseur d'objet tous les éléments relatifs à l'usager et à la distribution effectuée. Comme indiqué précédemment les moyens 113 et 114 pourront être réalisés à l'aide d'imprimantes numériques ou alphanumériques délivrant un reçu ou écrivant un journal de fond.

Par le moyen de dialogue composé des éléments (103) (219) et (221) le moyen de traitement de l'information (115) donne, en cours de dialogue, au support amovible, tous les éléments et informations nécessaires à sa gestion interne et au remplissage de son moyen de mémorisation (223). Le moyen de traitement de l'information (115) est à même de fournir par la liaison 110 au moyen de mémorisation (109) toutes les informations nécessaires à l'exploitation de la distribution par le prestataire de service, informations propres à l'usager et au support amovible et informations propres à la distribution.

L'issue du dialogue est la distribution de l'objet ou du service par le moyen de distribution (16), avec le niveau de sécurité souhaité. Ces sécurités peuvent être classées en quatre niveaux :

Un premier niveau existe dans la corrélation entre les informations traitées par le premier support amovible à partir des informations introduites par les moyens d'interface 112, 111, 104 et 105 et de celles qu'il contient dans ses zones de mémoire (224) et (225) qui ont été inscrites de façon indélibile.

Un deuxième niveau de sécurité est apporté comme il a été vu précédemment par l'usage du deuxième support amovible pour habiliter le premier support amovible.

Un troisième niveau de sécurité se situe au niveau du dialogue (103) sur la liaison entre le ou les supports amovibles (102) ou (104) et le moyen de traitement de l'information (115). Ce dialogue décrit précédemment est supporté par une seule liaison électrique ou non, qui transite par le moyen de connexion (101) ou (105). Ce dialogue n'utilise que la variation d'un seul et même signal émis par l'émetteur et détecté par le récepteur. Ce dialogue est bidirectionnel, l'émetteur et le récepteur étant respectivement constitués par le support amovible (2) ou (4) et le moyen de traitement de l'information (15) ou, réciproquement, respectivement le moyen de traitement de l'information (15) et le support amovible (2) ou (4). Ce dialogue (3) est logiquement conçu de telle manière que chaque information qui transite par cette liaison unique est précédée d'un état stable prédéterminé "prêt à recevoir" émis par le récepteur et détecté par l'émetteur, et est suivi d'un code de fin de message combiné avec la parité relative sur train d'information et éventuellement d'un message d'erreur de transmission ayant un état stable transitoire différent de l'état stable permanent "prêt à recevoir" détecté par l'émetteur et émis par le récepteur.

L'émetteur et le récepteur pouvant sur la même liaison changer de rôle, on conçoit que tout tiers écoutant les signaux sur la liaison n'a pas les moyens de retrouver les ordres, les informations et données qui peuvent, elles-même, être chiffrées et les compte rendus qui s'échangent continuellement entre le support amovible (102) ou (104) et le moyen de traitement de l'information (115).

La quatrième sécurité se situe au niveau de la consultation d'un moyen de mémorisation (107) interne ou non au système, amovible ou non, qui permet au moyen de traitement de l'information (115) de décider si le ou les supports amovibles présents dans le ou les moyens de connexion (1) ou (5) ont été invalidés par ailleurs, ne leur donnant plus la possibilité d'avoir accès au système de distribution. Ce peut être le cas d'un support amovible subtilisé à l'usager légitime avec les informations (224) permettant de le faire fonctionner et dont la disparition a été signalée au prestataire de service. Ceci peut se faire grâce aux informations (25) propres au support amovible ou aux informations (24) propres à l'usager.

Le distributeur qui vient d'être décrit peut naturellement distribuer des objets de toutes sortes en particulier de la monnaie ou des billets de banque. Il peut aussi naturellement fournir un service par exemple permetttre l'ouverture d'une porte pour donner l'accès au milieu situé derrière cette porte.

On imaginera facilement qu'un support amovible ne peut dialoguer avec n'importe quel moyen de traitement de l'information. Ces deux éléments, support amovible (102) et moyen de traitement de l'information (115), sont spécifiques l'un de l'autre grâce aux moyens (117) et (221) chacun spécifique au système, la distribution auquelle il a vocation ou auquelle il est rattaché. Par exemple, un support portatif (104) adapté avec un moyen (118) échangé avec un support portatif (102) adapté avec un moyen (117) ne peut en aucun cas permettre la délivrance de service demandé puisque (104) ne peut dialoguer avec le moyen de traitement de l'information qu'à travers le moyen (118) et non à travers le moyen (117). Le même support amovible (102) ne peut dialoguer avec le moyen de traitement de l'information (115) qu'à travers le moyen (117) et non à travers le moyen (118).

Un autre support amovible semblable valable pour un type de distribution, sera rejeté par tout système de distribution semblable mais adapté à un autre type de distribution.

0049650

L'exemple qui vient d'être décrit d'une réalisation préférée de l'invention n'est nullement limitatif, il va de soi que tout hommme de l'art bien au fait des systèmes distributeurs d'objets et de services pourra concevoir d'autres modes de réalisation de l'invention sans pour autant sortir de son cadre.

REVENDICATIONS

1. Système de distribution d'objets et d'acquisition de services caractérisé en ce qu'il comprend un premier moyen permettant de recevoir au moins un support amovible (102), un second moyen de traitement de l'information (115) programmable ou non, un troisième moyen de dialogue (103) bidirectionnel entre le dit support amovible (102) et le second moyen de traitement de l'information (115), un quatrième moyen de délivrance du service (116), le dit support amovible comprenant des moyens de connexions (219), des moyens de traitement de l'information (220), des moyens de mémorisation (223) (224) et (225), des moyens de décision (222), des moyens de dialogue bidirectionnels (221).

2. Système de distribution d'objets et d'acquisition de services selon la revendication 1 caractérisé en ce que le second moyen de traitement de l'information (115) est commandé par un programme propre (117) au type de distribution en combinaison avec au moins un support amovible.

3. Système selon la revendication 1 caractérisé en ce que le troisième moyen de dialogue (103), comprend une seule liaison électrique utilisant les variations d'un seul et même signal entre un émetteur et un récepteur.

4. Système selon la revendication 3 caractérisé en ce que le second moyen de traitement de l'information (115) et le support amovible (202) sont respectivement le récepteur et l'émetteur et/ou réciproquement l'émetteur et le récepteur pendant l'exécution d'un dialogue avec le second moyen de traitement de l'information 115.

5. Système selon la revendication 3 caractérisé en ce que le récepteur signale à l'émetteur son état "prêt à recevoir" en positionnant la dite liaison dans un état permanent détectable par l'émetteur.

6. Système selon les revendications 2 et 5 caractérisé en ce que le récepteur signale à l'émetteur qu'il a trouvé une erreur de transmission en positionnant la dite liaison dans un état stable temporaire détectable par l'émetteur, différent de l'état "prêt à recevoir".

7. Système selon la revendication 3 caractérisé en ce que le moyen de dialogue 103 permet l'échange des ordres et des informations codées, ainsi que des compte-rendus et des informations codées, entre l'émetteur et le récepteur.

8. Le dit troisième moyen de dialogue (103) selon la revendication 7 est caractérisé en ce que les informations échangées entre l'émetteur et le récepteur sont chiffrées.

9. Système selon la revendication 1 caractérisé en ce que le premier moyen est apte à recevoir au moins un second support amovible (104) simultanément au premier support amovible (102) semblable au dit premier support amovible (102).

10. Système selon la revendication 9, caractérisé en ce que le deuxième support amovible (104) converse avec le second moyen de traitement de l'information (15) à l'aide d'un autre moyen de dialogue (106) semblable au dit troisième moyen de dialogue (103).

11. Système selon la revendications 9, caractérisé en ce que le second support amovible (104) possède des moyens d'habilitation nécessaires pour l'utilisation du premier support amovible (102).

12. Système selon la revendication 11, caractérisé en ce que le deuxième support amovible (104) contient un algorithme ou une clé d'accès ainsi que des moyens de traitement de l'information nécessaires à l'établissement du dialogue du premier support amovible (102) et du second moyen de traitement de l'information (115).

13. Système selon les revendications 11 et 12, caractérisé en ce que le second moyen de traitement de l'information (115) comprend un programme propre (118) combiné avec la présence du deuxième support amovible (104).

14. Système selon l'une quelconque des revendications 1 à 15, caractérisé en ce qu'il comporte des moyens (113) et (114) d'enregistrement local sur un support non électronique et sans caractéristique magnétique particulière, permettant une consultation visuelle de certaines informations contenues ou issues du dialogue entretenu par le second moyen de traitement de l'information.

15. Système selon la revendication 14, caractérisé en ce que l'un des moyens d'enregistrement local (114) délivre des informations à l'usager.

16. Système selon l'une quelconque des revendications 1 à 15, caractérisé en ce qu'il comprend des moyens (107) et (109), amovibles ou non, de mémorisation, amovibles ou non et des moyens de lecture associés.

17. Système selon la revendication 16, caractérisé en ce que l'un des moyens de mémorisation est une mémoire de lecture (107) seulement, ayant été écrite en dehors du système.

18. Système selon l'une quelconque des revendications 1 à 17, caractérisé en ce que le moyen de traitement de l'information (115) comprend un programme propre à corréler les informations lues dans la mémoire de lecture (107) et les informations fournies par le ou les supports amovibles (102) et (104).

19. Système selon la revendication 16, caractérisé en ce que les moyens de mémorisation sont internes au système.

20. Système selon la revendication 16 caractérisé en ce que les moyens de mémorisation sont situés en dehors du système et relié à lui par des liaisons spécialisées (108) et (110).

21. Système selon la revendication 20, caractérisé en ce que ces moyens de mémorisation font partie d'un système informatique autonome et différent du système distributeur.

22. Système de distribution de service selon l'une quelconque des revendications 1 à 21, caractérisé en ce qu'il autorise ou non des opérations en combinaison avec le ou les supports amovibles.

23. Système de distribution de service selon l'une quelconque des revendications 1 à 22, caractérisé en ce que le quatrième moyen de délivrance du service (116) consiste à autoriser l'accès de milieux protégés à des usagers dont l'identification a été réalisée par le système.

24. Système de distribution de service, selon la revendication 23, caractérisé en ce qu'un des milieux protégés est un moyen de transmission d'informations.

25. Système de distribution de service selon l'une quelconque des revendications 1 à 23 caractérisé en ce que l'accès à un des milieux protégés autorise la distribution d'objets par un moyen distributeur de ces objets.

26. Système de distribution de service selon la revendication 25 caractérisé en ce que les objets distribués sont des billets de banque ou de la monnaie en général.

27. Système de distribution selon l'une quelconque des revendications 1 à 23, caractérisé en ce que le système est un terminal point de vente.

FIG. 1

FIG.2

FIG. 3

FIG.4

Memoire physique

Mémoire logique

ADO

LOCK | PARAM

PARAM

Partie 0    ADT

Partie 1

ADL

Partie 2    ②

ADF    TYPE

Lock F n°fab+serie

Mémoire
de
définition

} Mémoire
de création

FIG.5

E ‾‾‾|start| Cb7 Cb6 Cb5 Cb4 Cb3 Cb2 Cb1 Cb0 PAR |‾‾‾

R —— PR ————————————————— V₀

Reception    | ER |    V₁

## FIG.10

| LOCK | LP | EP | ERREUR | | |
|------|----|----|--------|--|--|
| ERREUR | | | ACCES | | |
| ACCES | | DEBAC | PLEIN | CLE N°1 | VAL K1 |
| | | | | | |

PARTIE 0

ADT →

| R7 | R8 | |
|----|----|--|

PARTIE 1

ADL →

| VAL | U | ADT | ADL | MONTANT |
|-----|---|-----|-----|---------|
| VAL | | | | NOM |
| VAL | | | | RIB |
| VAL | | | | RIB |
| VAL | | | | RIB |
| | | | | TYPE |
| | | | | N° SERIE |

PARTIE 2

## FIG.6

FIG.7

0049650

# FIG. 8

RAZ

I/O  | SYNC | CODOP+AD | ¦ KEY ¦ | SYNC | DATA |

**FIG. 15**

| A | |
|---|---|
| B | C |
| D | E |
| H | L |
| SP | |
| PC | |
| I | |

**FIG. 9**

RΛZ

I/O  | SYNV | CODOP+AD | DATA | KEY | SYNC | DATA |

Vp

**FIG. 17**

**0049650**

FIG. 11

FIG.12

Flowchart:

- 12113 — TEST PORTE
- 12114 — Lecture porte
- 12115 — 1 (non / oui)
- 12116 — CT ← N1
- 12117 — H (oui)
- 12118 — CT ← CT-1
- 12119 — CT = 0 (non)
- 12120 — INT
- 12121 — Lecture porte
- 12122 — 1 (non / oui)
- 12123 — Attente Start

0049650

FIG.13

0049650

FIG.14

FIG.16

0049650

FIG.18

FIG.19

FIG.20

Office européen
des brevets

**RAPPORT DE RECHERCHE EUROPEENNE**

| Catégorie | Citation du document avec indication, en cas de besoin, des parties pertinentes | Revendication concernée |
|---|---|---|
| X | US - A - 4 105 156 (J. DETHLOFF) <br><br> * abrégé; figures; colonne 2, ligne 1 à colonne 8, ligne 36 * <br><br> -- | 1-4, 16-26 |
| | FR - A - 2 401 459 (CII-HB) <br><br> * document en entier * <br><br> -- | 1-8, 22-27 |
| | US - A - 3 976 840 (S. CLEVELAND) <br><br> * abrégé; figures; colonne 2, ligne 31 à colonne 8, ligne 52 * <br><br> -- | 1-7,9, 11-24 |
| | FR - A - 2 394 131 (CII-HB) <br><br> * revendications; figures 1 à 5; page 2, ligne 38 à page 4, ligne 32 * <br><br> -- | 1,9, 11-13 |
| A | FR - A - 2 417 141 (TRINDEL) <br><br> * revendications; figures * <br><br> -- | 1-4,8, 22-27 |
| A | GB - A - 2 019 060 (PITNEY BOWES) <br><br> * abrégé; figures * <br><br> -- | 1,3,4, 7,8, 22-24 |
| A | US - A - 3 637 994 (J.K. ELLINGBOE) <br><br> ./. | |

**DOCUMENTS CONSIDERES COMME PERTINENTS**

**CLASSEMENT DE LA DEMANDE (Int. Cl. ³)**

G 07 F 7/10
G 06 K 19/06

**DOMAINES TECHNIQUES RECHERCHES (Int. Cl. ³)**

G 07 C 9/00
9/02
11/00
G 07 F 7/00
7/02
7/08
7/10
E 05 B 49/00
G 06 K 19/06
G 06 F 15/30

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe a la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-01-1982 | DAVID |

OEB Form 1503.1 06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | * abrégé; figures; colonne 6, ligne 10 à colonne 8, ligne 66 *<br><br>-- | 1,3,4,<br>7,8,22<br>23 | |
| A | EP - A - 0 013 192 (CII-HB)<br><br>* abrégé; figure 1; page 8, ligne 18 à page 11, ligne 6 *<br><br>--------- | 1,3,4,<br>7 | |
| | | | DOMAINES TECHNIQUES RECHERCHES (Int. Cl. ³) |

OEB Form 1503.2  06.78